# EUROPEAN PATENT SPECIFICATION

(11) **EP 0 351 936 B1**
(45) Date of publication and mention of the grant of the patent: **31.07.1996**
(21) Application number: 89303846.3
(22) Date of filing: 19.04.1989
(51) Int. Cl.: C08G 73/10, C08G 61/12

(54) **Polyetherketoneimides**
Polyetherketonimide
Poléthercétoneimides

(30) Priority: 19.04.1988 GB 8809231
(43) Date of publication of application: 24.01.1990
(60) Divisional application: 95201783.8
(73) Proprietor: RAYCHEM LIMITED, London, EC4 1NL (GB)
(72) Inventor: Whiteley, Richard, Highworth Wiltshire (GB); Borrill, Christopher, Swindow Wilthshire (GB)
(74) Representative: Jay, Anthony William

(56) References cited:
- POLYMER PREPRINTS (Am. Chem. Soc.,Div. Polym. Chem.) vol. 28, no. 1 (1987) p 92-94

## Description

This invention relates to polyetherketoneimides, hereinafter referred to as PEKImides, which are useful as high performance engineering polymers.

The classical method of polyimide synthesis uses aromatic polyamic acids preparation of which is described in "Preparative Methods of Polymer Chemistry", 2nd Edition by Sorenson and Campbell, pp 170-171. Polyimide films, such as DuPont "Kapton" film, can be made by casting from the 17% solution of polyamic acid formed by such a procedure, followed by a heat setting programme reaching elevated temperatures, at which the polyamic acid intermediate is "heat set", that is imidised. The initial polymer thus tends to be insufficiently melt-stable for melt processing by techniques such as moulding or extrusion, and the heat setting results in a high-temperature-resisting thermoset polyimide which can no longer be dissolved or thermally shaped. It has been shown that the reason for the thermoset character of the polymer after heat setting is that not all of the amic acid groups have cyclised. Some remain as amic acid and some imidise intermolecularly to produce cross-linking. Even after long and tedious heat setting procedures at high temperatures such as 300°C, only 85% cyclisation has been measured. (J.Poly Sci Polymer Chemistry Ed. Vol 18, pp 1375-1385, 1980; ibid, Vol 19, pp 795-805 1981; J.Macromol. Sci. - Phys., B25(4), pp 405-418 1986). PEKImides made by the amic acid synthesis are described by P M Hegenrother and S J Havens in a paper entitled "New Semicrystalline Polyimides" delivered to The Interdisciplinary Symposium on Recent Advances in Polyimides and other High Performance Polymers, sponsored by the American Chemical Society in Reno, Nerada, 13-17 July 1987.

Polymer Preprints (Am. Chem. Soc., Div. Polym. Chem.) Vol. 28, no. 1, 1987, p92-94 discloses ether-ketone-imide polymers and their production from polyamic acid. It discloses homopolymers, not copolymers.

Enhanced melt stability is expected, however, when the imide repeat units are derived from a pre-existing imide monomer, (hereinafter "the imide monomer route") preferably by the method described in EP-A-0178185. The resulting PEKImides can then be substantially free of the un-imidised amic acid residues which result from the amic acid synthesis. EP-A-0178185 describes such preparation of polymers comprising a repeat unit of formula

-(R₁-O)ₙ-R₂-CO-

in which R₁ is p-phenylene or 4,4'-biphenylene; R₂ among several other complex possibilities may be
-R₁-Y=R₄=Y-R₁-(O-R₁)n-CO-R₃- or -R₁-CO-R₃-Y=R₄=Y-R₃-; R₃ is alkylene, phenylene, naphthylene, pyridenediyl, or 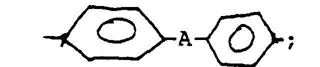 R₄ is 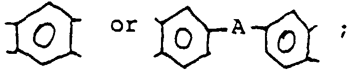 Y among several other possibilities may be 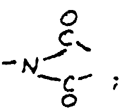 and A is ether, ketone, sulphone, alkylene, thioether, isopropylidene, or a direct bond. Among the many kinds of polymer covered, specific examples of PEKImides described are of the types wherein the grouping -Y=R₄=Y- is 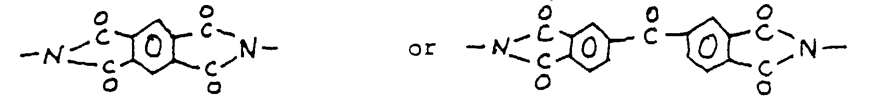 and R₃ is phenylene, the polymers for example having the repeat unit. 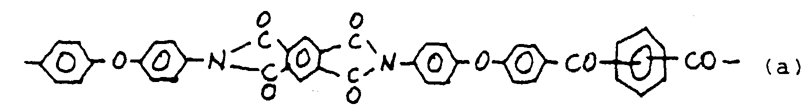 or

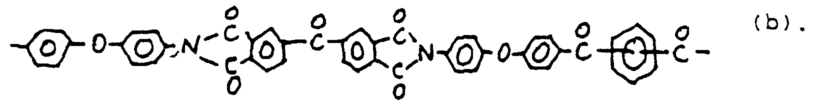

However, despite the absence of unimidised amic acid groups achieved by this superior method of synthesis, the known PEKImides of types (a) and (b) tend to have unexpectedly low melt stability, rendering them difficult to use as thermoplastics for melt processing techniques such as moulding or extrusion.

One aspect of the present invention provides a group of novel PEKImides by the imide monomer route which tend to have improved melt stability and/or other characteristics in terms of properties such as increased glass transition temperature (Tg), or a useful degree of crystallinity, or improved solubility characteristics, or unexpectedly low crystalline melting temperature (Tm), alone or in combination. The novel compounds and improvements according to the invention are achieved by selectively varying the imide grouping and/or replacing the phthaloyl grouping in the above known repeat units.

According to the present invention an ether-ketone-imide copolymer comprises two repeat units, one of which is an imide repeat unit, which imide repeat unit has the formula 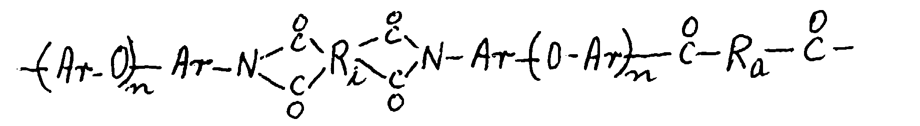 which satisfies conditions A and B
where
condition A
is that at least one of conditions (i) and (ii) is true, namely
(i) Ri is 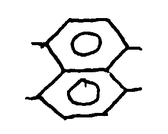 or is 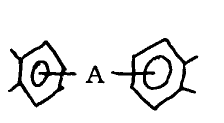 in which A is a direct bond, or -O-, or another substantially non-electron withdrawing group
(ii) Ra is an at least partly arylene moiety other than m- or p-phenylene;
condition B
is that
Ri is selected from substituted or unsubstituted 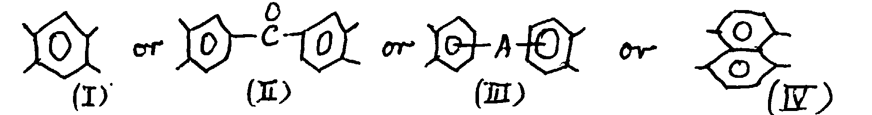 in which A is a direct bond, 0, S, SO₂, CH₂, C(CH₃)₂, C(CF₃)₂, Si(CH₃)₂,
-O-Ar-O-, or A is CO in structures other than II;
Ra is selected from substituted or unsubstituted at least partly arylene moieties attached by their arylene ring carbon atoms to the adjacent -CO- groups of the imide repeat unit
each Ar independently is a substituted or unsubstituted arylene moiety; and
each n independently is 1 or 2, preferably 1.

The imide repeat unit is preferably derived from a pre-existing imide monomer. The co-polymers are preferably substantially free of un-imidised amic acid moities.Preferably, substantially all of the imide units incorporate the unchanged cyclic in imide form of the imide monomer.

The present invention further provides an ether-ketone-imide copolymer comprising an imide repeat unit of formula (ARR) above, wherein,
Which satisfied conditions A and B;
Where condition A is that at least one of conditions (i) and ii) is true, namely

(i) R₁ is 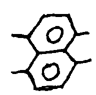
(ii) R₁ is 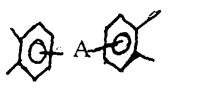 in which
   A is a direct bond, O, S, SO₂, CH₂, C(CH₃)₂, C(CF₃)₂, Si(CH₃)₂, or -O-Ar-O-,
and where condition (ii) is true
Ra is an at least partly arylene moiety other than m-phenylene:-
and where condition B is that
Ra is selected from substituted or unsubstituted at least partly arylene moieties attached by their arylene ring carbon atoms to the adjacent -CO- groups of the imide repeat unit;
each Ar independently is a substituted or unsubstituted arylene moiety; and
each n independently is 1 or 2, preferably I since repetition of the bracketed moiety increases the risk of undesired substitution in the aryl rings during polymerisation.

Where "substituted or unsubstituted" aryl moieties are referred to, the unsubstituted form is preferred, and it will be understood that any substituents which may be present on the aryl rings, for example, lower alkyl, halo, nitro, phenyl, cyano, 2-aralkenyl or alkynyl groups, will preferably be substantially inert, in the sense that they do not interfere to any significant or unacceptable extent with the polymerisation reaction or the polymer characteristics. Small substituents, especially substantially non-electron withdrawing groups such as methyl or other lower alkyl groups, may be preferable in this respect.

The reference to Rₐ as an "at least partly arylene" moiety will be readily understood from the preferred selection of Rₐ from substituted or unsubstituted p-phenylene, m-phenylene, 1,4-naphthylene, 2,6-naphthylene, 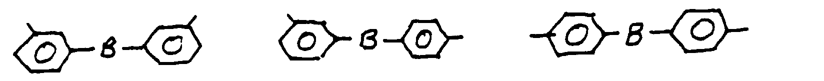 in which B is ether oxygen, ketone, thioether, sulphone, hexafluorisopropylidene,isopropylidene, or a direct bond. The phenylene rings linked by a group B are examples of "partly" arylene moieties when B is other than a direct bond, while the other possibilities in this preferred selection of Rₐ are all arylene moieties. Useful examples of Rₐ include 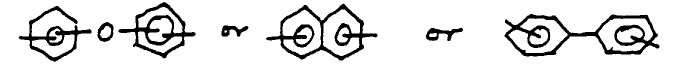 and Rₐ may be m-',or p-phenylene when part (i) of the aforesaid provisos applies. In the novel polymers subject to the proviso (ii) that Rᵢ is 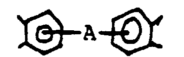 and Rₐ is other than m-phenylene, Rₐ may be p-phenylene as well as the other examples listed above.

The linking entity -A- in Rᵢ is preferably substantially non-electron-withdrawing, which term includes a direct bond, -O-, -S-, -CH₂-, C(CH₃)₂, C(CF₃)₂, Si(CH₃)₂, for example. Electron-withdrawing -A- groups such as ketone or sulphone may contribute to the melt-instability observed with the aforementioned known PEKImides (a) and (b), and are thus preferably excluded from Rᵢ. The instability may be alleviated to some extent by the specified selection of Rₐ groups other than phenylene, which also tends to benefit other characteristics of the polymers. Especially useful Rᵢ moieties include 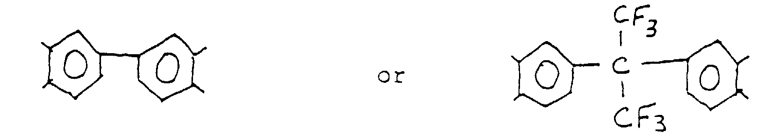 or

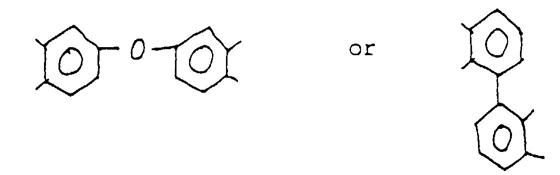

Subject to the aforesaid provisos, A is preferably ether oxygen, sulphone, hexafluoroisopropylidene. Isopropylidene, or a direct bond, or A is ketone in structures other than II. For the copolymers and the polymers made by the imide monomer route, A may perhaps also be CO in structures other than II, although this may be less preferable for reasons of stability as already discussed.

The preferred arylene moieties Ar are independently selected from substituted or unsubstituted p-phenylene or m-phenylene or 3, 3'-, 3,4'-, or 4,4'-biphenylylene, 1,4-naphthylene or 2,6-naphthylene (preferably a group other than naphthylene since naphthylene groups are more susceptible to undesired substitution during polymerisation). Preferably, the Ar moieties respectively attached to the two imide nitrogen atoms are the same as each other, and the other Ar moieties are the same as each other, all Ar moieties preferably being the same as one another. Phenylene is most often preferred, especially p-phenylene, for which the preferred polymer synthesis is advantageous in favouring the production of p-linked aryl moieties with negligible or greatly reduced risk of undesired substitution in other positions as described in EP-A-0178185.

Accordingly, the invention includes a method of manufacturing the polymers defined according to this invention comprising polymerising (a) an imide monomer corresponding to the part of the said imide repeat unit containing R₁ and having terminal Aᵣ moieties, which terminal Aᵣ moieties have either (case 1) at least one reactive hydrogen and no acyl groups on each terminal Aᵣ or (Case 2) at least one reactive hydrogen on one terminal Aᵣ and an acyl halide group on the other terminal Aᵣ with (b) an aromatic diacyl halide in Case 1 or with itself in Case 2, in the presence of a Lewis acid catalyst, and preferably in the presence of a Lewis base controlling agent for the Lewis acid catalyst.

Preferred imide monomers are those of "Case 1" above, preferably having a 4-phenoxyphenyl moiety attached to each imide nitrogen. The Rᵢ moiety itself may be of formula (I), (II), (III), or (IV) subject to the aforesaid proviso.

Melt stability is also enhanced when the bis-imidestructure illustrated by formula (II) or Rᵢ is replaced by structures (III) in which A is ether oxygen, isopropylidene,hexafluoroisopropylidene, or a direct bond. This enhancement is possibly due to the reduction in the number of ketone groups in the Rᵢ imide entity, but it has unexpectedly also been found that the choice of Rₐ can strongly influence the melt stability of a given imide moiety, for reasons which are not fully understood.

The invention provides copolymers comprising, in addition to the said imide repeat unit, aryl ether ketone repeat units of various kinds. Preferred ether ketone repeat units may be selected from the group consisting of

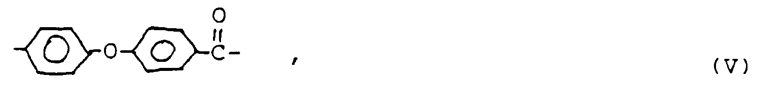

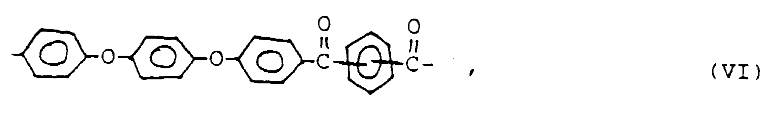

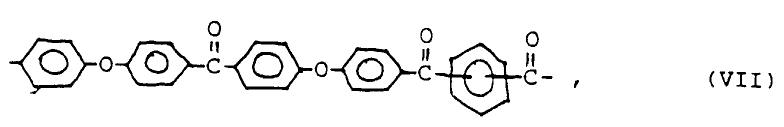

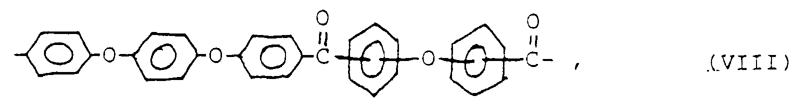

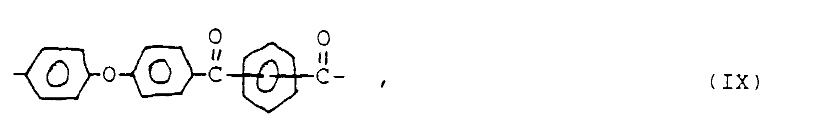

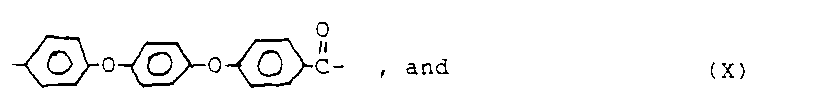

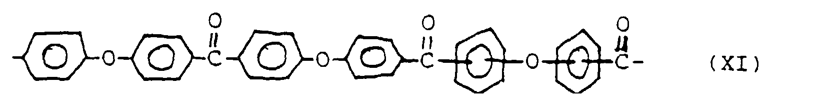

To obtain the terminal -CO-Aᵣ-CO- grouping described above at the right hand end of these units, (except V and X) it is generally preferred to add to the reaction medium a mixture of a monomer containing two active hydrogen atoms and a dicarboxylic acid halide. Thus, for example, an equimolar amount of 4,4'-bisphenoxy-benzophenone and terephthaloyl dichloride would be added to the reaction mixture to give repeat units of type (VII). The imide repeat units are preferably formed, in situ, from aryloxy- terminated imide monomers and aromatic diacid halides. Substantially stoichiometric amounts of the diacyl halide and the aryloxyimide and any ketone comonomers are used, subject to the usual small variations in the proportions to control molecular weight and structure. Mixtures of two or more diacyl compounds, two or more aryloxy imides and two or more comonomers may be used, although increasing complexity of the polymer molecular may tend to encourage formation of amorphous polymers.

Thus, preferred imide monomers include the following (the abbreviations in brackets being used to identify these in the specific examples given later herein). The imide monomers may be prepared by known methods, or, for example by reacting the appropriate dianhydride with the appropriate substituted aniline (usually p-phenoxy aniline) in boiling DMAC (N,N-dimethylacetamide) for 30 minutes, followed by cooling, filtering and washing with DMAC followed by methanol. 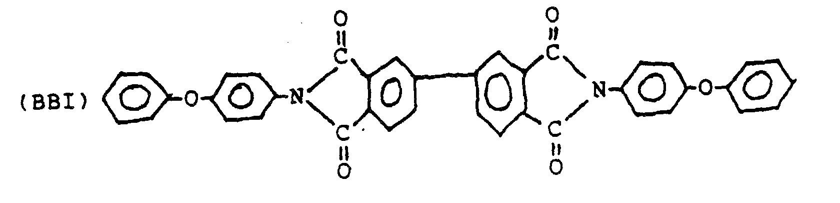 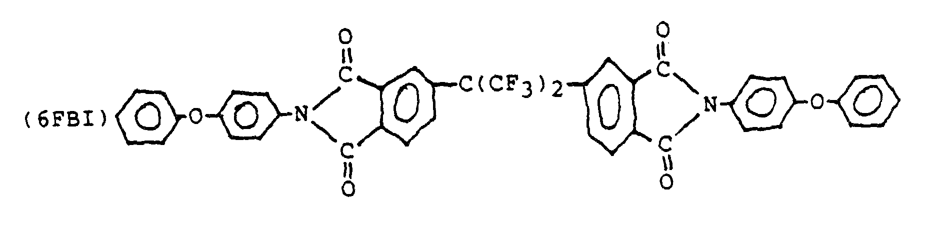 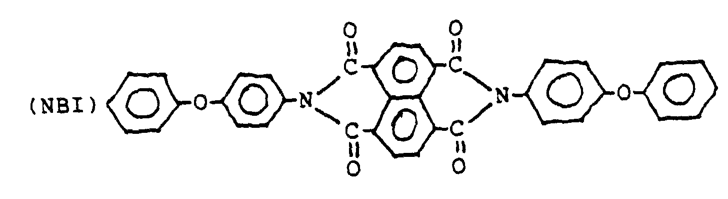 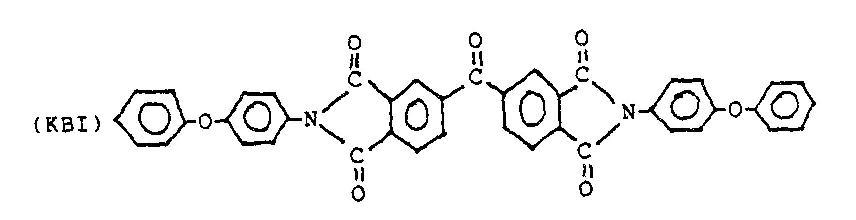 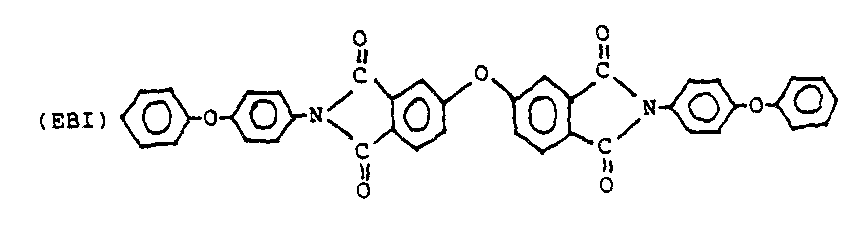 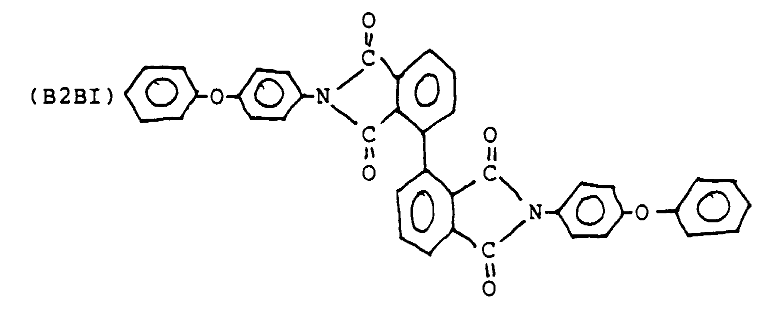 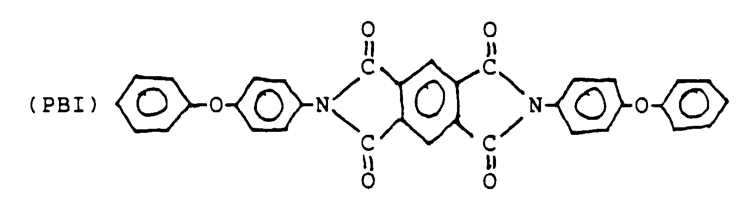 preferred co-monomers for the copolymer further repeat units include 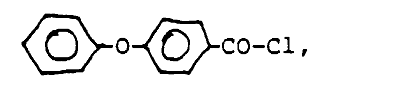 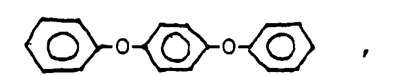 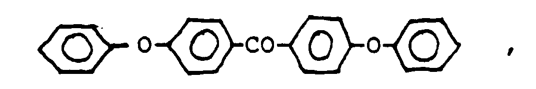 and 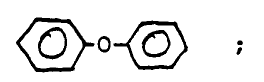 and preferred diacyl halides include

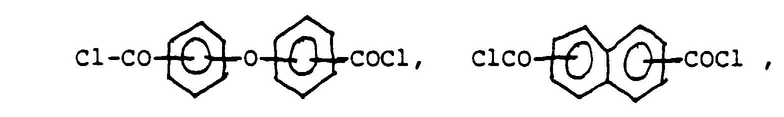

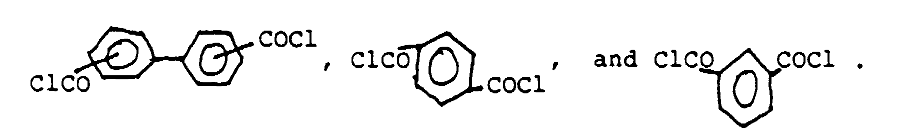

Specifically interesting polymers according to the invention include those wherein the imide repeat unit is 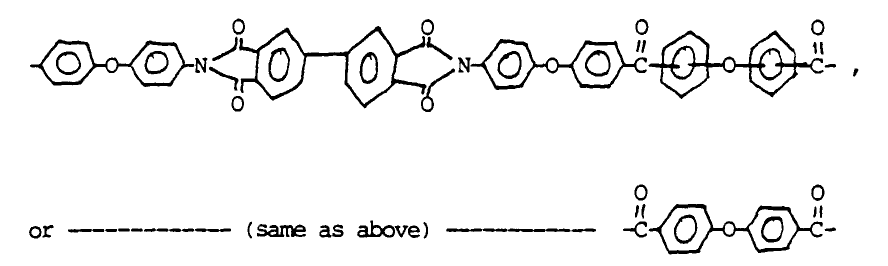 and copolymers thereof where the further repeat unit has the formula V or XI above; 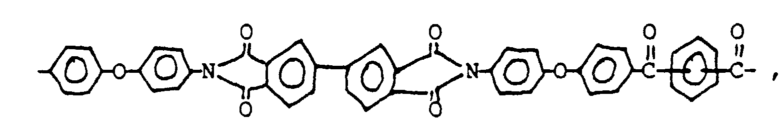 or 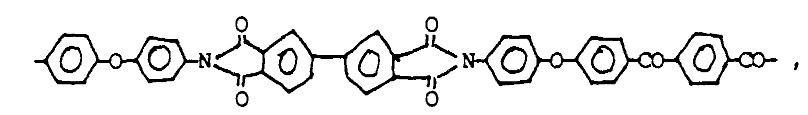 or 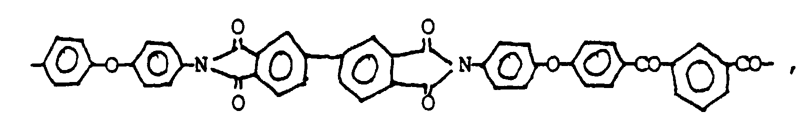 and copolymers of any of these three where the further repeat unit has the corresponding isomeric form of formula VII above; and any of these preferred polymers wherein the illustrated imide entity derived from monomer BBI is replaced by that derived from monomer 6FBI, NBI, EBI, or B2BI.

In many cases, the preferred polymers are those which are partly crystalline, for example at least 5%, preferably at least 10%, and more preferably at least 20 percent, crystalline, as measured by X-ray diffraction. Copolymers comprising less than 50, preferably less than 40, and frequently less than 30, mol percent of the imide repeat unit have been found preferable in terms of a tendency towards increased Tg, while maintaining Tm at a convenient level for ease of processing.

In other cases, amorphous polymers according to this invention have useful characteristics, for example solubility in common organic solvents such as chloroform or N-methylpyrrolidone.

The invention is further illustrated by the following specific examples, in which melt viscosities were measured using a capillary rheometer and, unless otherwise stated, a shear rate of 85 Hz. In the examples, the following abbreviations are used for three well known techniques:
- TGA =: Thermogravimetric Analysis
- DSC =: Differential Scanning Calorimetry
- DMTA =: Dynamic Mechanical & Thermal Analysis

### Synthesis Method I

50 ml of 1,2-dichloroethane were stirred and cooled to about -20 c. Aluminium (14.84 g, 0.1113 mole) was added followed by N,N-dimethyl- formamide (3.08 ml, 0.0400 mole). The other ingredients were then added. The temperature, which had been kept below -10 C, was then allowed to rise to about 20 C. After 18 hours the rubbery polymer complex was worked up by blending in chilled (about -15 C) methonol using a Waring blender to give a pale yellow fibrous polymer, followed by boiling in methanol for 2 hours and then drying at 140 C under vacuum for 2 hours.

### Example 1

40 ml of dichloromethane were stirred and cooled to -20 C in a glass 500 ml glass resin kettle, The temperature was maintained at between -20 C and -10 C while aluminium chloride (41.5 g, 0.3112 mole) was added, followed by N,N-dimethylformamide (6.96 g, 0.0952 mole), isophthaloyl chloride (9.6676 g, 0.04762 mole), benzoyl chloride (capping agent, 0.6828 g, 0.00486 mole), 4.4.'-diphenoxybenzophenone (13.7538 g, 0.03754 mole), and the bisimide BBI (7.8656 g, 0.01251 mole). A further 75ml of dichloromethane was introduced during these additions to facilitate the quantitative transfer of reagents. The temperature was raised to 0 C for 15 minutes and then allowed to rise to room temperature (15 - 20C). After about 6 hours the rubbery reaction mass was blended with a mixture of 400 g ice, 400 ml water and 200 ml methanol in a Waring blender. The resulting polymer was washed with water and then stirred in a mixture of 800 ml water and 200 ml methanol for about 16 hours before it was washed again. The polymer was then boiled in a mixture of 800 ml water, 200 ml methanol and 1.5 ml of concentrated hydrochloric acid. 20 ml of distillate were removed and the mixture was refluxed for 3 hours after which the polymer was filtered and washed. The polymer was then refluxed for 3 hours in a mixture of 800 ml water, 200 ml methanol and 1.5 ml of'880' ammonia(an agueous ammonia solution having a relative density of 0.880) after which the polymer was filtered, washed, and then dried at 100 C in air for I hour and then at 300 C in air for 15 hours.

The yield of pale yellow fibrous polymer was 24.2 g (85.5%). It had an IV of 0.57 dl/g and had a melt viscosity of 875 poise after 6.5 minutes at 400 C, and 1400 poise after 31 minutes of 400 C.

The polymer contained the repeat units 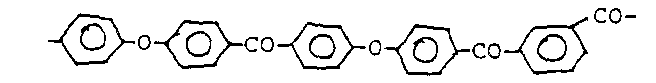 and 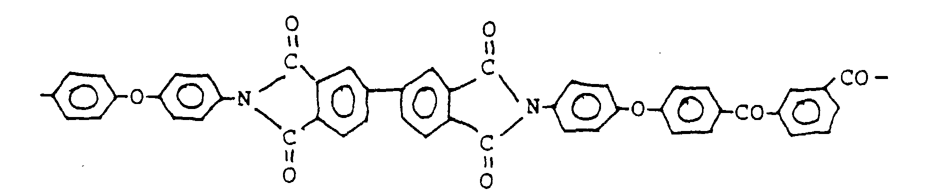 in the ratio 3:1.

### Example 2

The polymerisation of Synthesis Method 1 was repeated using essentially the same procedure but with the following material; dichloromethane (149 ml), aluminium chloride (44.0g 0.33 mole), dimethylsulphone (10.46 g, 0.1111 mole), the bisimide BBI g, 3.5973 g 0.0057200 mole), isophthaloylchloride (11.2789 g, 0.05556 mole), 4,4' - diphenoxybenzophenone (18.8706 g, 0.0515000 mole), and benzoyl chloride (capping agent, 0.4686 g, 0.00333 mole). The yield of polymer was 29.42 g (97.9%), and its IV was 0.80 dl/g.
Elemental analysis: Al=480 PPM, Cl=261 ppm, S=43 ppm
DSC gave Tg of 163 C, and Tm or 304 C.
TGA gave the following data;

| | 1% wt Loss | 1% min wt loss | max. Rate of wt loss |
|---|---|---|---|
| Air | 510 C | 515 C | 637 C |
| N2 | 508 C | 520 C | 555 C |

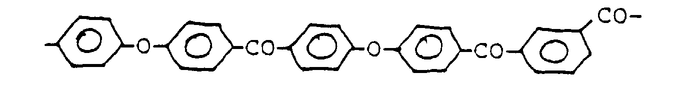

and 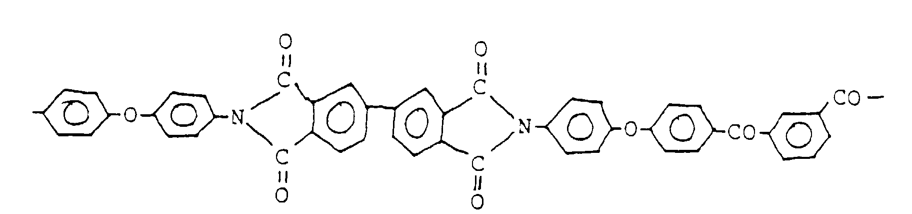 in the ratio 9:1.

### Example 3

The polymerisation of synthesis method 1 was repeated using essentially the same procedure but with the following materials; 1,2-dichloroethane (110 ml), aluminium choride (19.1 g, 0.143 mole), N,N-dimethylformamide (5.24 ml, 0.0680 mole), the bisimide 6FBI (2.6475 g, 0.0034000 mole), 4,4'-diphenoxybenzophenone (5.0566 g, 0.0138 mole, terephthaloylchloride (3.4514 g, 0.017000 mole and pentafluorobenzoyl chloride (capping agent, 0.0922 g, 0.000400 mole). The yield of fibrous polymer was 9.32 g (93.3%), and its IV was 1.32 dl/g. DSC gave Tg of 188 C, and indicated a relatively low degree of crystallinity with a Tm of 345 C.

TGA:

| | 1% wt loss | 1%/min wt loss |
|---|---|---|
| Air | 501 C | 517 C |
| N2 | 497 C | 522 C |

The polymer contains the repeat units 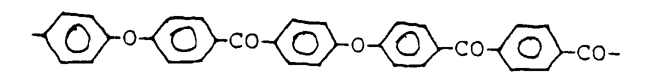 and 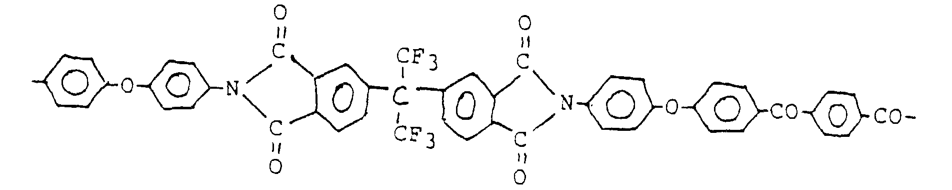 in the ratio 4.06:1.

### Example 4

The polymerisation of Example 1 was repeated using essentially the same procedure but using the following reactants;

Dichloromethane (128 ml), aluminium chloride (41.5 g, 0.3112 mole), N,N-dimethylformamide (6.961 g, 0.09524 mole), terephthaloylchloride (9.6676 g, 0.04762 mole), benzoyl chloride (0.6828 g, 0.00486 mole), 4,4' -diphenoxybenzophenone (13.7538 g, 0.03754 mole, and the bisimide 6FBI (9.7426 g, 0.01251 mole).

The yield of white fibrous polymer was 27.3 g (90.4%). It had an IV of 0.61 dl/g and had a melt viscosity of 6830 poise after 6.5 minutes at 400 C, and 10900 poise after 31.5 minutes at 400 C.

The polymer contained the repeat units 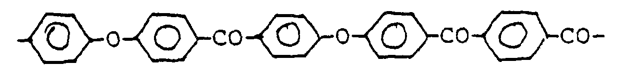 and 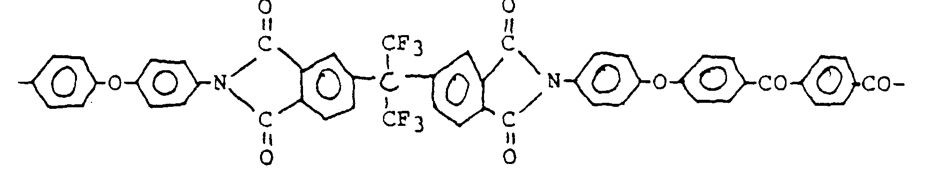 in the ratio 3:1.

### Example 5

the polymerisation of Example 1 was repeated using essentially the same procedure but using the following reactants;

Dichloromethane (129 ml), aluminium chloride (42.9 g, 0.322 mole), N.N-dimethylformamide (6.961 g, 0.09524 mole), naphthalene-2,6-diacidchloride (12.0519 g, 0.04762 mole), benzoyl chloride (0.4685 g, 0.00333 mole), 4,4'-diphenoxybenzophenone (13.5445 g, 0.03696 mole), and the bisimide KBI (8.0909 g, 0.01232 mole).

The yield of pale yellow fibrous polymer was 27.2 g (89.0%). It had an IV of 1.20 dl/g and had a melt viscosity of 75250 poise after 7 minutes at 400 C, and 99800 poise after 17 minutes at 400 C. The average rate of increase in melt viscosity over the 10 minute period was 3.3% per minute, compared with 22.9% per minute for the polymer described in comparison Example A and 40% per minute for the polymer described in comparison Example B.

Repeat units: 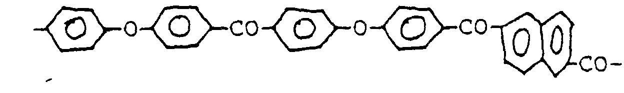 and 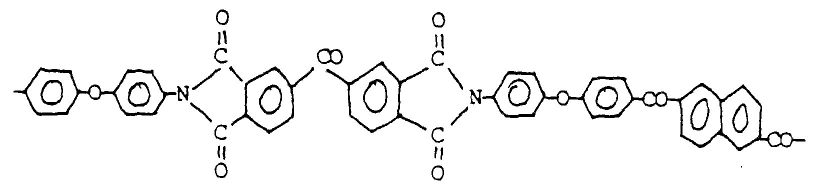 in the ratio 3:1

### Example 6

The polymerisation of Example 1 was repeated using essentially the same procedure but using the following reactants;

Dichloromethane (142 ml), aluminium chloride (43.3 g, 0.325 mole), N.N-dimenthylformamide (6.961 g, 0.09524 mole), diphenylether-4,4'-diacidchloride (14.0533 g, 0.04762 mole), benzoyl chloride (0.6828 g, 0.00486 mole), 4,4'-diphenoxybenzophenone (13.7538 g, 0.03754 mole), and the bisimide KBI (8.2159 g, 0.01251 mole).

The yield of pale yellow fibrous polymer was 30.0 g (90.8%). It had an IV of 0.55 dl/g and had a melt viscosity of 10200 poise after 6.5 minutes at 400 C, and 36800 poise after 31.5 minutes at 400 C.

The polymer contained the repeat units 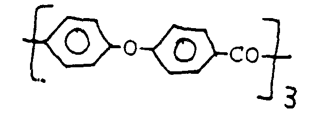 and 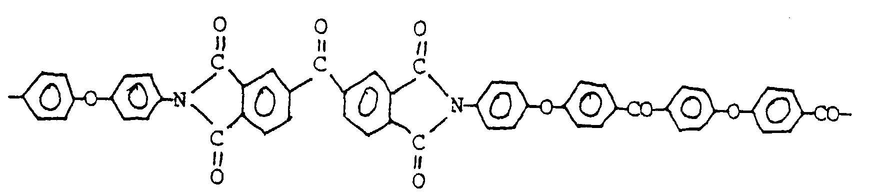 in the ratio 3:1

### Example 7

The polymerisation of synthesis method 1 was repeated using essentially the same procedure but with the following materials; 1,2-dichloroethane (60ml), aluminium chloride (13.32 g, 0.0999 mole), dimethylsulphone (3.74 g, 0.0398 mole), the bisimide KBI (3.3579 g, 0.005114 mole), diphenylether-4,4'-diacidchloride (2.9298 g, 0.009927 mole), 4,4'-diphenoxybenzophenone (1.8738 g, 0.005114 mole), and benzoyl chloride (capping agent, 0.0843 g, 0.000600 mole). The yield of polymer was 7.35 g (98%), and its IV was 0.87 dl/g.

Elemental analysis: Al = 800 ppm, Cl = 562 ppm.

A sample was melted in a glass tube using a hot air gun. It gave a clear, low viscosity, orange/brown melt which partially crystallised on cooling to give a very tough material.

DSC gave a Tg of 194 C and a Tm of 378 C.

A 1 g pressed disc was hot pressed at 400 C between Al foils (5 min pre-heat + 30 sec at 40 tons) to give a tough film. DMTA of this film gave a Tg of 193 C.

TGA gave the following data;

| | 1% wt loss | 1%/min wt loss | Max. rate of wt loss |
|---|---|---|---|
| Air | 492 C | 517 C | 642 C |
| N2 | 518 C | 529 C | 556 C |

The polymer contained the repeat units 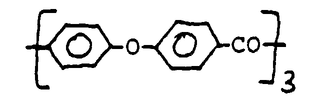 and 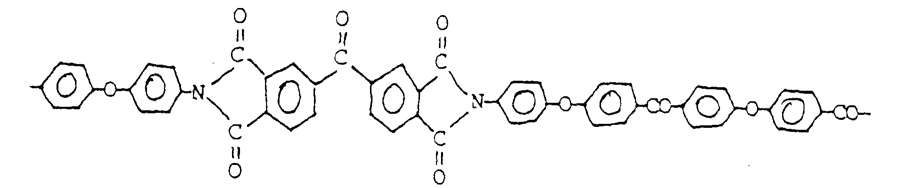 in the ratio 1:1

### Example 8

The polymerisation of Example 3 was repeated using essentially the same procedure but with the following reactants;

Dichloromethane (132 ml), aluminium chloride (47.9 g, 0.3594 mole), N,N-dimethylformamide (8.1211 g, 0.11111 mole), terephthaloylchloride (11.2789 g, 0.05556 mole), benzoyl chloride (0.5467 g, 0.00389 mole), 4,4'-diphenoxybenzophenone (15.8019 g, 0.04313 mole), and the bisimide NBI (8.6625 g, 0.01438 mole).

The polymer yield was 30.0g (93.5%). It had an IV of 0.78 dl/g and had a melt viscosity of 27100 poise after 6.25 minutes at 400 C, and 34700 poise after 31 minutes at 400 C.

The polymer contained the repeat units 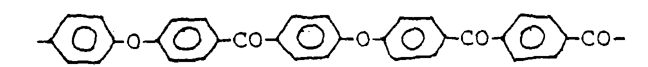 and 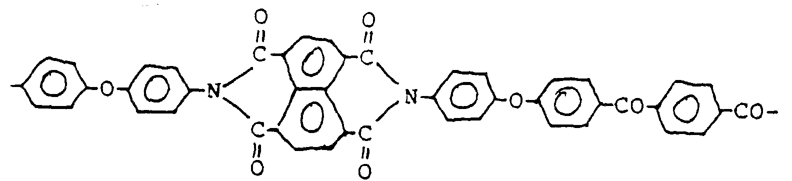 in the ratio 3:1,

### Example 9

The polymerisation of Example 1 was repeated using essentially the same procedure but using the following reactants;

Dichloromethane (140 ml), aluminium chloride (41.5 g, 0.3112 mole), dimethylsulphone (8.965 g, 0.09524 mole), diphenylether-4,4'diacidchloride (14.0533 g, 0.04762 mole), benzoyl chloride (0.6268 g, 0.00486 mole), 4,4'-diphenoxybenzophenone (13.7538 g, 0.03754 mole), and the bisimide BBI (7.8656 g, 0.01251 mole).

The yield of pale yellow fibrous polymer was 30.0 g (91.7%). It had an IV of 0.54 dl/g and had a melt viscosity of 1660 poise after 6.5 minutes at 400 C and 1930 poise after 16 minutes at 400 C. The average rate of increase in viscosity over the 9.5 minute period was 1.7% per minute, compared with 23% and 40% as mentioned in Example 10.

The polymer contained the repeat units 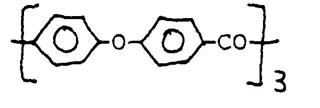 and 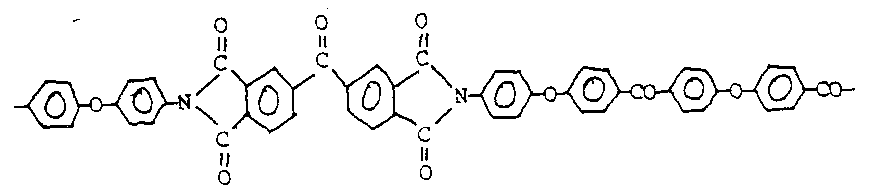 in the ratio 3:1.

### Example 10

The polymerisation of synthesis method 1 was repeated using essentially the same procedure but with the following materials; 1,2-dichloroethane (70 ml), aluminium chloride (20.9 g, 0.156 mole), N,N-dimethylformamide (5.12 g, 0.0701 mole), the bisimide BBI (3.7719 g, 0.0060000 mole), diphenylether-4,4'-diacidchloride (5.1685 g, 0.017513 mole), 4,4'-diphenoxybenzophenone (4.3970 g, 0.012000 mole), and benzoyl chloride (capping agent, 0.1369 g, 0.000974 mole). The yield of polymer was 11.99 g (98.6%), and its IV was 0.74 dl/g.

Elemental analysis: Al = 490 ppm, Cl = 250 ppm.

DSC gave a Tg of 179 C, a Tc of 240 C, and a Tm of 343 C.

A 1 g pressed disc was hot pressed at 400 C between Al foils ( 5 min pre-heat + 30 sec at 40 tons) giving a clear, yellow, tough film. DMTA gave a Tg of 180 C.

TGA gave the following data;

| | 1% wt loss | 1%/min wt loss | Max. rate of wt loss |
|---|---|---|---|
| Air | 472 C | 520 C | 639 C |
| N2 | 519 C | 529 C | 563 C |

The polymer contained the repeat units 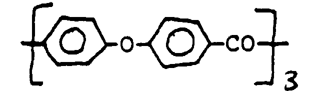 and 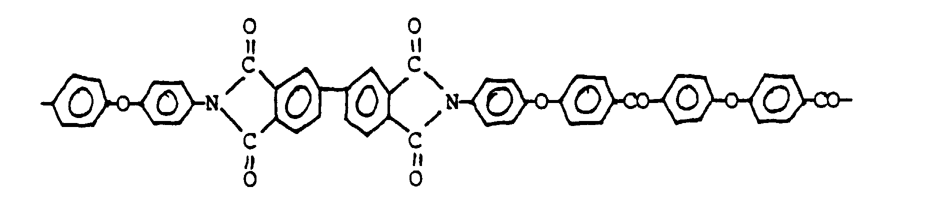 in the ratio 2:1.

### Example 11

The polymerisation of synthesis method 1 was repeated using essentially the same procedure but with the following materials; dichloromethane (60 ml), aluminium chloride (15.97 g, 0.120 mole), dimethylsulphone (4.95 g, 0.0526 mole), the bisimide BBI (3.3087 g, 0.0052633 mole), terephthaloylchloride (2.6713 g, 0.013158 mole), 4,4-'-diphenoxybenzophenone (3.0114 g, 0.0082185 mole), and benzoyl chloride (capping agent, 0.0910 g, 0.000647 mole). The yield of polymer was 7.91 g (97.7%), and its IV was 1.16 dl/g.

Elemental analysis: Al = 490 ppm, Cl = 226 ppm.

DSC gave a Tg or 200 C and a Tm of 367 C.

A 1 g pressed disc was hot pressed at 400 C between Al foils (5 min pre-heat + 30 sec at 40 tons) giving a very good quality, clear, yellow, tough film. DMTA gave a Tg of 198 C.

TGA gave the following data;

| | 1% wt loss | 1%/min wt loss | Max. Rate of wt loss |
|---|---|---|---|
| Air | 499 C | 524 C | 634 C |
| N2 | 515 C | 529 C | 554 C |

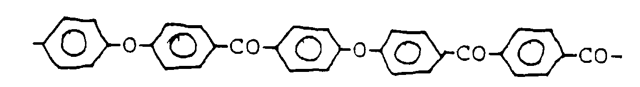

and 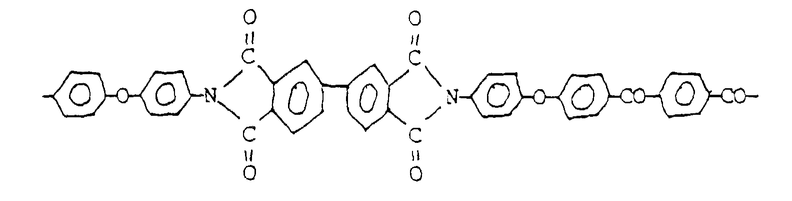 in the ratio 4.5:1.

### Example 12

The polymerisation of synthesis method 1 was repeated using essentially the same procedure but with the following materials; dichloromethane (60 ml), aluminium chloride (12.8 g, 0.096 mole), dimethylsulphone (3.55 g, 0.0377 mole), the bisimide BBI (4.2765 g, 0.0068028 mole), diphenylether-4,4'diacidchloride (2.7795 g, 0.0094183 mole), 4,4'-diphenoxybenzophenone (1.0683 g, 0.0029155 mole), and benzoyl chloride (capping agent, 0.0843 g, 0.000600 mole). The yield of polymer was 7.17 g (95.6%), and its IV was 0.78 dl/g.

TGA gave the following data;

| | 1% wt loss | 1%/min wt loss | Max. Rate of wt loss |
|---|---|---|---|
| Air | 465 C | 520 C | 631 C |
| N2 | 515 C | 526 C | 561 C |

The polymer contained the repeat units 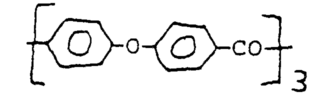 and 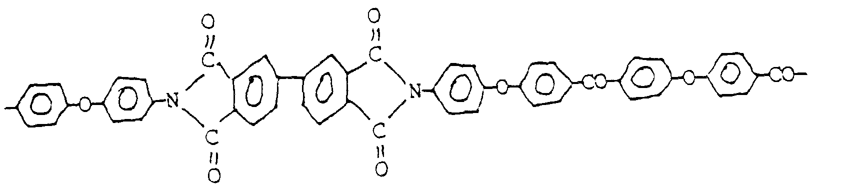 in the ratio 0.43:1.

### Example 13

The polymerisation of Example 1 was repeated using essentially the same procedure but with the following reactants;

Dichloromethane (128 ml), aluminium chloride (141.1 g, 0.3081 mole), N,N-dimethylformamide (6.961 g, 0.09524 mole), 2,6-naphthalene diacidchloride (12.052 g, 0.04762 mole), benzoyl chloride (0.4686 g, 0.00333 mole), 4,4'diphenoxybenzophenone (13.5445 g, 0.03696 mole), and the bisimide BBI (7.7459 g, 0.01232 mole).

The yield of pale yellow fibrous polymer was 26.9 g (89.0%). It had an IV of 0.98 dl/g and had a melt viscosity of 31500 poise after 6.5 minutes at 400 C, and 42900 poise after 31 minutes at 400 C.

The polymer contained the repeat units 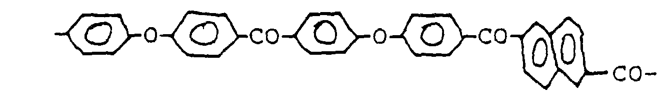 and 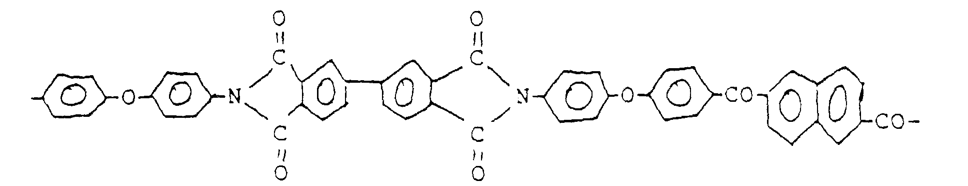 in the ratio 3:1.

### Example 14

The polymerisation of synthesis method 1 was repeated using essentially the same procedure but with the following materials; dichloromethane (33 ml), aluminium chloride (8.9 g), N,N-dimethylformamide (1.46 g), the bisimide BBI (1.9614 g), 2,6-naphthalene-diacidchloride (2.5309 g), 4,4'diphenoxybenzophenone (2.6675 g), and benzoyl chloride (capping agent 0.1125 g). The yield of polymer was 6.34 g (97.3%), and its IV was 0.73 dl/g.

DSC gave a TG of 200 C, and Tm's of 345 C and 370 C.

The polymer contained the repeat units 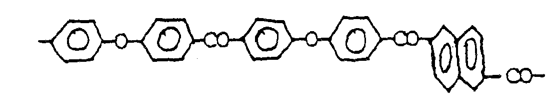 and 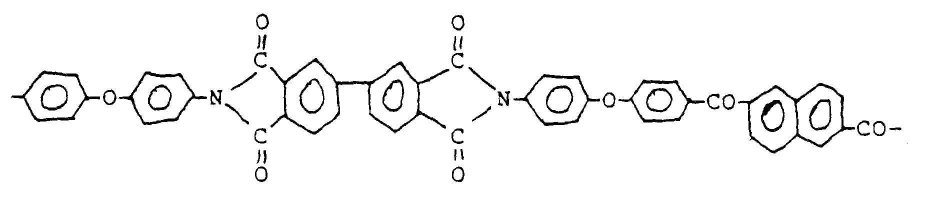 in the ratio 2.33:1

### Example 15

The polymerisation of Example 1 was repeated using essentially the same procedure but with the following reactants;

Dichloromethane (116 ml), aluminium chloride (41.5 g, 0.3112 mole), dimethyl sulphone (8.96 g, 0.0952 mole), terephthaloyl chloride (9.6676 g, 0.04762 mole), benzoyl chloride (0.6828 g, 0.00486 mole), 4,4'-diphenoxybenzophenone (13.7538 g, 0.03754 mole), and the bisimide BBI (7.8656 g, 0.01251 mole).

The yield of pale yellow fibrous polymer was 24.9 g (87.9%). it had an IV of 0.70 dl/g and had a melt viscosity of 6475 poise after 9 minutes at 400 C, and 10200 poise after 35.5 minutes at 400 C. The average rate of increase in melt viscosity over the 26.5 minute period was 2.2% per minute, compared with 22.9% per minute for the polymer described in Comparison Example A, and 40% per minute for the polymer described in Comparison Example B.

The polymer contained the repeat units 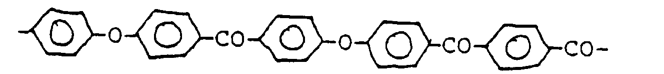 and 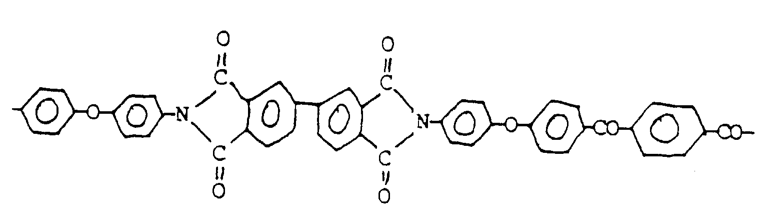 in the ratio 3:1.

### Example 16

A 10 litre Hastalloy B vessel was charged with 3.5 litres of dichloromethane. This was stirred and cooled to -13 C. The temperature was maintained at between -15 C and -4 C while aluminium chloride (1766 g, 13.24 mole) was added, followed by dimethylsulphone (282.4 g, 3.000 mole), 4,4'-diphenoxybenzophenone (528.38 g, 1.4420 mole), the bisimide BBI (388.51 g, 0.61800 mole), terephthaloyl choride (406.04 g, 2.0000 mole), and benzoyl chloride (capping agent, 16.868 g, 0.12000 mole). A further 356 ml of dichloromethane was introduced during these additions to facilitate the quantitative transfer of reagents. The vessel was pressurised 0.34 MPa (50 psi) with nitrogen and the temperature was raised to 20 C when the contents were transferred into a PTFE lined steel tube as described in EP -A-0134384, and maintained at a temperature of 25 C for 6 hours. The orange/brown rubbery polymer complex was then discharged from the tube, using a hydraulic ram, into a hammer mill where it was decomplexed in about 40 litres of a mixture of 95% by volume water and 5% by volume methanol which had been cooled to between 0 and 5 C. The resulting polymer was filtered and washed with about 20 litres of water three times. It was then stirred for about 80 hours in a mixture of about 23 litres of water and 6 litres of methanol. This mixture was then boiled and about 3 litres of distillate were removed before the polymer was filtered and washed again with about 20 litres of water three times. The polymer was then dried at 125 C in air for 20 hours. The yield of pale yellow fibrous polymer was 1077 g (90.5%). The IV was 0.98 dl/g.

75 g of this polymer was further dried at 300 C in air for about 16 hours. The melt viscosity after 5 minutes at 400 C was 9420 poise at 500 Hz, 18600 poise at 85 Hz, and 28200 poise at 20 Hz. The melt viscosity after 30 minutes at 400 C was 9660 poise at 500 Hz, 21800 poise at 85 Hz, and 37500 poise at 20 Hz. The average rate of increase in melt viscosity at 85 Hz over the 25 minute period was 0.69% per minute, compared with 23% and 40% for the comparison Examples.

Repeat units: 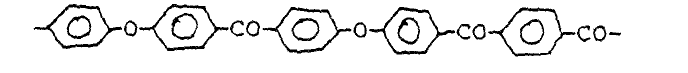 and 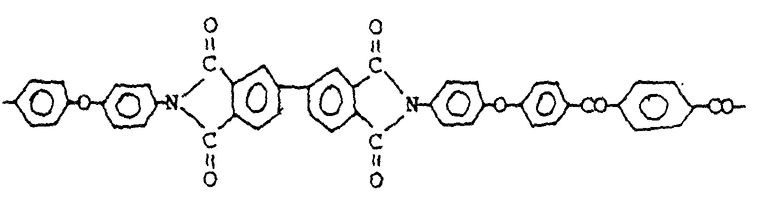 in the ratio 2.33:1.

About 6kg of this polymer, made as described above, were extruded at 380 C using a Baker-Perkins twin screw extruder, and the extrudate was granulated to give polymer chip.

DSC (10 C/min) gave a Tg of 191 C, a Tc of 249 C, and a Tm of 357 C. XRD measurements on an annealed sample showed a degree of crystallinity of between 25% and 35%.

### Example 17

A 10 litre Hastalloy B vessel was charged with 3.5 litres of dichloromethane. This was stirred and cooled to -16 C. The temperature was maintained at between -18 C and -7 C while aluminium chloride (1810 g, 13.58 mole) was added, followed by dimethylsulphone (266.4 g, 2.830 mole), 4.4'-diphenoxybenzophenone (393.02 g, 1.0726 mole), the bisimide BBI (551.69 g, 0.87758 mole), terephthaloyl chloride (383.06 g, 1.88679 mole), and benzoyl chloride (capping agent, 17.823 g, 0.12679 mole). A further 404 ml of dichloromethane was introduced during these additions to facilitate the quantitative transfer of reagents. The vessel was pressurised to 50 psi with nitrogen and the temperature was raised to 18 C when the contents were transferred into a PTFE lined steel tube as in Example 21, and maintained at a temperature of 25 C for 23 hours. The orange/brown rubbery polymer complex was then discharged from the tube, using a hydraulic ram, into a hammer mill where it was decomplexed in about 30 litres of a mixture of 95% by volume water and 5% by volume methanol which had been cooled to between 0 and 5 C. The resulting polymer was filtered and washed with about 20 litres of water three times, then stirred in a mixture of 27 litres of water and 7 litres of methanol for 29 hours after which time a second batch of polymer, made in essentially the same way, was added and the combined batches were then stirred for a further 16 hours. The mixture was then boiled and about 3 litres of distillate were removed before the polymer was filtered and washed again with about 20 litres of water three times. The polymer was then dried at 125 C in air for 22 hours. The yield of yellow fibrous polymer was 2138 g (88.8%). The IV was 0.93 dl/g.

75 g of this polymer was further dried at 300 C in air for about 17 hours. The melt viscosity after 5 minutes at 400 C was 11050 poise at 500 Hz, 26100 poise at 85 Hz, and 43100 poise at 20 Hz. The melt viscosity after 30 minutes at 400 C was 11500 poise at 500 Hz, 29600 poise at 85 Hz, and 55300 poise at 20 Hz. The average rate of increase in melt viscosity at 85 Hz over the 25 minute period was 0.54% per minute, compared with 23% and 40% as aforesaid.

Tensile properties at 20 C of an annealed, extruded monofilament (0.35 mm diameter) were as follows;
8.5% elongation to yield
Yield stress = 100 MPa
140% elongation to break
Ultimate tensile stress = 160 MPa
Initial modulus = 2500 MPA

At 180 C the values were; 2.7%, 37 MPa, 450%, 76 MPa, and 1600 MPa respectively.

The polymer contained the repeat units 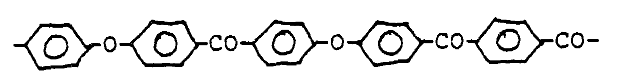 and 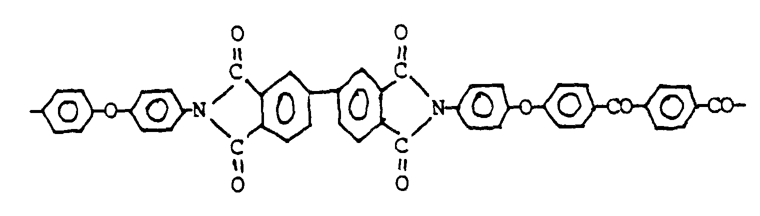 in the ratio 1.22:1.

About 6 kg of this polymer, made as described above, were extruded at 400 C using a Baker-Perkins twin screw extruder, and the extrudate was granulated to give polymer chip. The IV of this polymer chip was 108 dl/g.

DSC (10 C/min) gave a Tg of 202 C, a Tc of 291 C, and crystalline melting temperatures at both 345 C and 387 C.

XRD measurements on an annealed sample showed a degree of crystallinity of between 25% and 35%.

A DMTA scan (1 Hz, 4 C/min, 50 C to 300 C) of an annealed, compression moulded sample showed that the flexural modulus dropped to 89.0% of the 50 C value at 180 C, to 85.4% at 190 C, to 74.5% at 195 C, and to 51.2% at 200 C.

Some of the chip was extruded a second time and then a third time. The polymer darkened in colour very slightly but the extrusion conditions were unaltered and the IV of the polymer was unchanged. The extruded polymer and the re-extruded samples all dissolved completely in 98% sulphuric acid to give clear solutions containing no gel.

### Example 18

The polymerisation of Example 1 was repeated using essentially the same procedure but with the following reactants;

Dichloromethane (21 ml), aluminium chloride (8.85 g, 0.0663 mole), diphenylsulphone (3.274 g, 0.01500 mole), terephthaloylchoride (2.0302 g, 0.010000 mole), benzoyl chloride (0.0928 g, 0.00066 mole), 4.4'diphenoxybenzophenone (2.6496 g, 0.00723 mole), and the bisimide B2BI (1.9482 g, 0.00310 mole).

The work-up used was essentially the same as that described in Example 17. The yield of polymer was 5.5 g (92%), and its IV was 0.63 dl/g. DSC showed a Tg of 193 C and a Tm of 338 C. 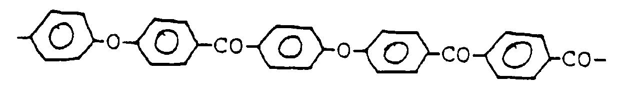 and 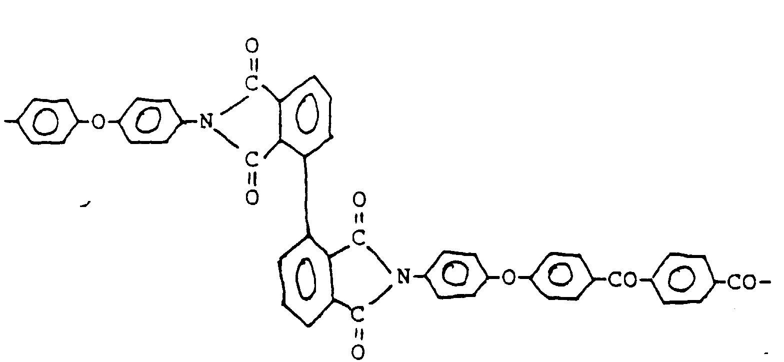 in the ratio 2.33:1.

### Example 19

The polymerisation of example 1 was repeated using essentially the same procedure but with the following reactants;

Dichloromethane (98 ml), aluminium chloride (44.1 g, 0.331 mole), dimethylsulphone (7.06 g, 0.0750 mole), terephthaloylchloride (10.1510 g, 0.050000 mole), benzoyl chloride (0.4217 g, 0.003000 mole), 4,4′-diphenoxybenzophenone (13.2094 g, 0.03605 mole, and the bisimide EBI (9.9598 g, 0.015450 mole).

The work-up used was essentially the same at that described in Example 17. The yield of polymer was 28 g. The IV 0.93 dl/g Elemental analysis Al = 740 ppm, cl = 50 ppm. DSC showed a Tg of 184 C, a Tc of 255 C, and a Tm of 347 C.

The polymer contained the repeat units 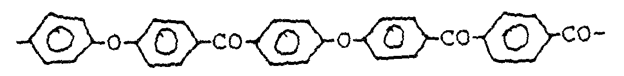 and 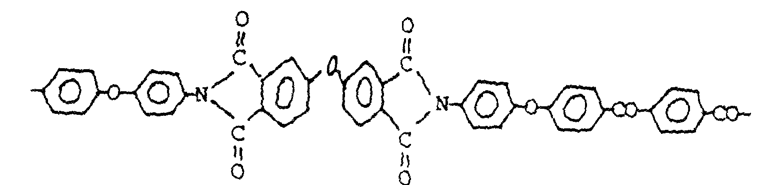 in the ratio of 2.33:1.

### Comparative Test A

The polymerisation of Example 1 was repeated using essentially the same procedure but with the following reactants;

Dichloromethane (112 ml), aluminium chloride (41.5 g, 0.311 mole), N,N-dimethylformamide (6.961 g, 0.09524 mole), terephthaloyl chloride (9.6676 g, 0.04762 mole), benzoyl chloride (0.6828 g, 0.00486 mole), 4,4'diphenoxybenzophenone (13.7538 g, 0.03754 mole), and the bisismide PBI (6.9135 g, 0.01251 mole).

The yield of pale yellow fibrous polymer was 25.5 g (93.2%). It had IV of 0.71 dl/g. Capillary rheology measurements at 400 C showed that the polymer cross-linked quite rapidly and high pressures were needed to extrude a brittle fractured rod. Stable extrusion conditions could not be obtained but approximate 'melt' viscosities were 175000 poise after 2 minutes at 400 C, and 245000 poise after 3 minutes at 400 C, indicating an average rate of increase over the one minute period of 40% per minute.

The polymer contained the repeat units 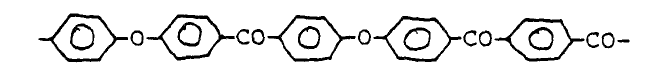 and 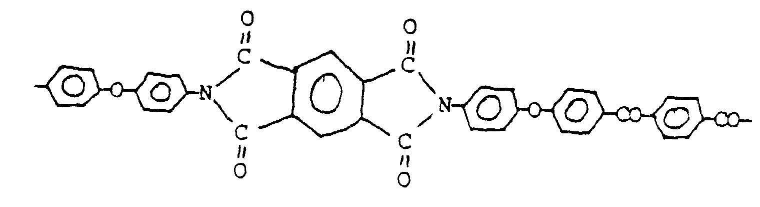 in the ratio 3:1.

### Comparative Test B

The polymerisation of Example 1 was repeated using essentially the same procedure but with the following reactants;

Dichloromethane (118 ml), aluminium chloride (43.3 g, 0.325 mole), N,N-dimethylformamide (6.961 g, 0.09524 mole), terephthaloyl chloride (9.6676 g, 0.04762 mole), benzoyl chloride (0.6828 g, 0.00486 mole), 4,4'diphenoxybenzophenone (13.7538 g, 0.03754 mole), and the bisismide KBI (8.2159 g, 0.01251 mole).

The yield of pale yellow fibrous polymer was 24.6 g (85.8%). It had IV of 52 dl/g and had a melt viscosoty of 9450 poise after 7 minutes at 400 C, 22400 poise after 16 minutes at 400 C, and 61300 poise after 31 minutes at 400 C, indicating an average rate of increase over the 24 minute period of 22.9% per minute.

The polymer contained the repeat units 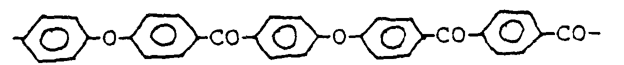 and 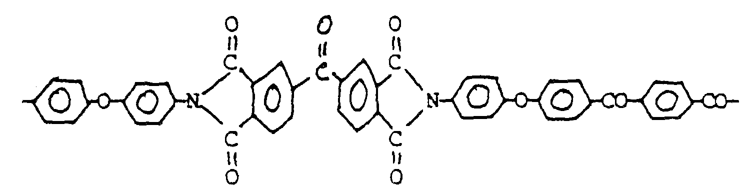 in the ratio 3:1.

## Claims

1. An ether-ketone-imide copolymer comprising two repeat units, one of which is an imide repeat unit, which imide repeat unit has the formula 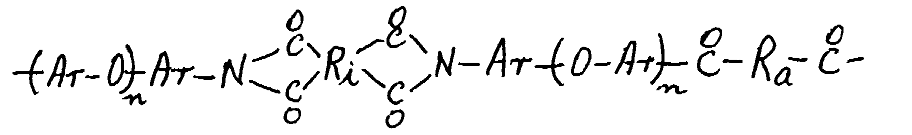 which satisfies conditions A and B
where
condition A
is that at least one of conditions (i) and (ii) is true, namely
(i) Ri is 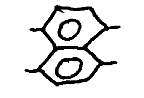 or is 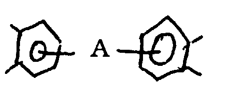 in which A is a direct bond, or -O-, or another substantially non-electron withdrawing group
(ii) Ra is an at least partly arylene moiety other than m- or p-phenylene;
condition B
is that
Ri is selected from substituted or unsubstituted 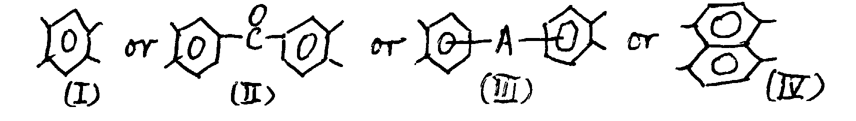 in which A is a direct bond, 0, S, SO₂, CH₂, C(CH₃)₂, C(CF₃)₂, Si(CH₃)₂,
-O-Ar-O-, or A is CO in structures other than II;
Ra is selected from substituted or unsubstituted at least partly arylene moieties attached by their arylene ring carbon atoms to the adjacent -CO- groups of the imide repeat unit;
each Ar independently is a substituted or unsubstituted arylene moiety; and
each n independently is 1 or 2, preferably 1.

2. A copolymer according to claim 1, wherein the other repeat unit is an aryletherketone repeat unit.

3. A copolymer according to claim 2, wherein the aryletherketone repeat unit is selected from

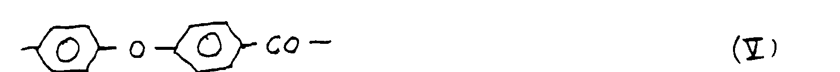

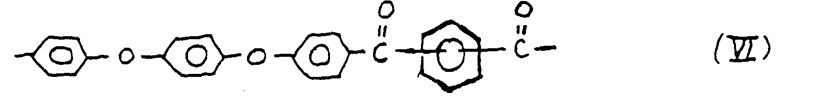

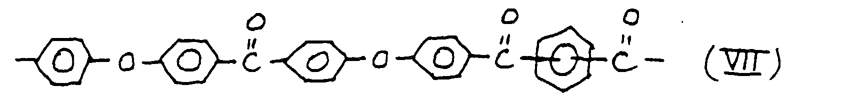

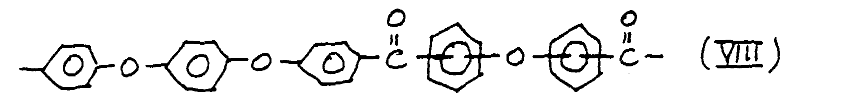

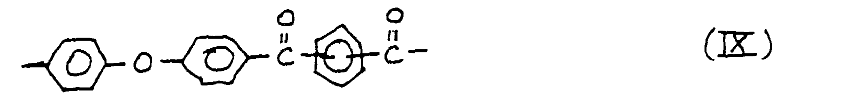

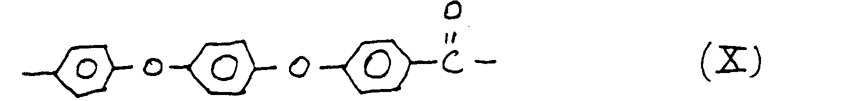

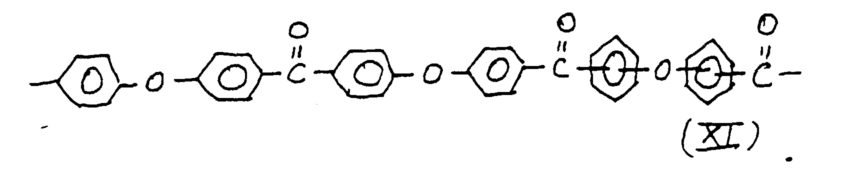

4. An ether-ketone-imide copolymer comprising an imide repeat unit of formula 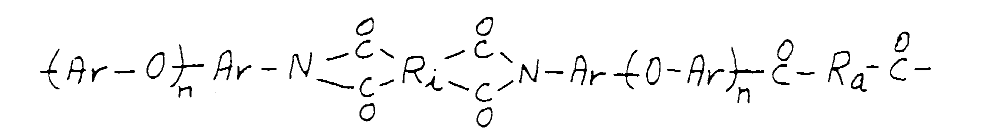 which satisfies conditions A and B
Where condition A is that at least one of the conditions (i) and (ii) is true, namely
(i) Ri is 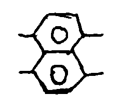 or
(ii) Ri is 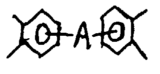 in which
A is a direct bond, O, S, SO₂, CH₂, C(CH₃)₂, C(CF₃)₂,
Si(CH₃)₂, or -O-Ar-O-,
and (where condition (ii) is true)
Ra is an at least partly arylene moiety other than m-phenylene:-
and where condition B is that
Ra is selected from substituted or unsubstituted at least partly arylene moieties attached by their arylene ring carbon atoms to the adjacent -CO- groups of the imide repeat unit;
each Ar independently is a substituted or unsubstituted arylene moiety; and
each n independently is 1 or 2, preferably 1.

5. A copolymer according to any preceding claim, wherein Rₐ is selected from substituted or unsubstituted p-phenylene, m-phenylene, 1,4-naphthylene, 2-6-naphthylene, 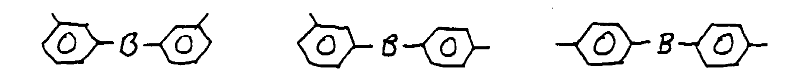 in which B is ether oxygen, ketone, thioether, sulphone, hexafluorisopropylidene, isopropylidene, or a direct bond.

6. A copolymer according to any preceding claim, wherein each Ar independently is substituted or unsubstituted p-phenylene or m-phenylene or 3,3'-, 3,4'-, or 4,4'-biphenylylene or 2,6-naphthylene, preferably a group other than napthylene.

7. A copolymer according to claim 1, 2 or 3, or any claim when dependent thereon, wherein A is ether oxygen, sulphone, hexafluorisopropylidene, isopropylidene, or a direct bond, or A is ketone in structures other than II.

8. A copolymer according to claim 4 or claim 5 or 6 when dependent on claim 4, wherein A is ether oxygen, sulphone, hexafluorisopropylidene, isopropylidene, or a direct bond.

9. A copolymer according to any preceding claim wherein Rᵢ is 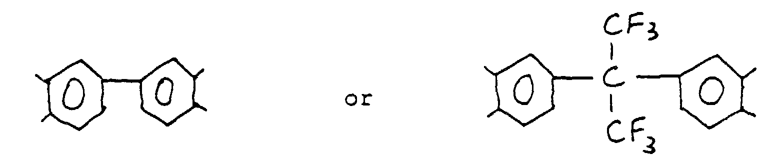 or

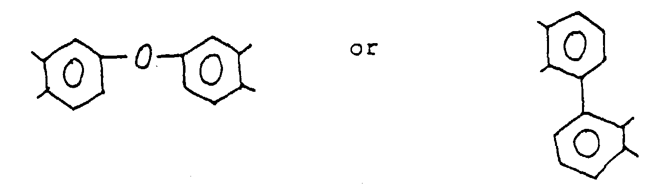

10. A copolymer according to any preceding claim, wherein Rₐ is

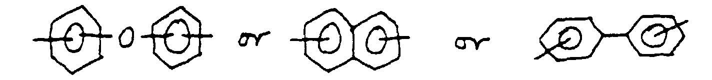

11. A copolymer according to claim 1, 2, 3, or any claim dependent thereon, wherein part (i) of condition A applies and Rₐ is m- or p-phenylene.

12. A copolymer according to claim 3 or any of claims 4 to 8 when dependent thereon, wherein Rₐ is p-phenylene.

13. A copolymer according to any preceding claim wherein the Ar moieties respectively attached to the two imide nitrogen atoms are the same as each other, and the other Ar moieties are the same as each other, all Ar moieties preferably being the same as one another.

14. A copolymer according to claim 13, wherein all of the Ar moieties are phenylene, preferably p-phenylene.

15. A copolymer according to claim 1, 2 or 3 wherein the said repeat unit is

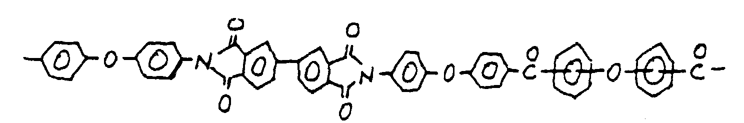

16. A copolymer according to claim 1, 2 or 3 wherein the said imide repeat unit is:

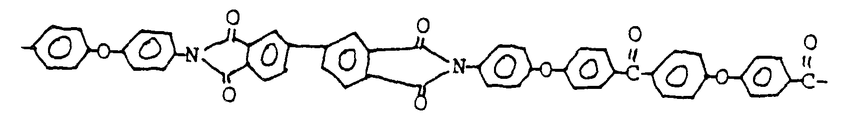

17. A copolymer according to claim 15 or 16, having a repeat unit of formula V or of an isomeric form of formula XI corresponding to the form of the imide unit.

18. A copolymer according to claim 1, 2, or 3 wherein the said imide repeat unit is

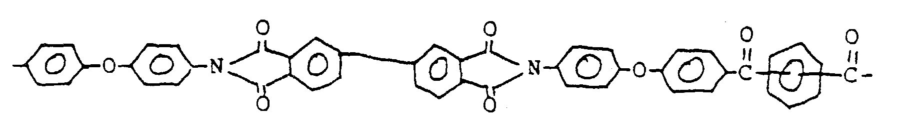

19. A copolymer according to claim 1, 2 or 3 wherein the said imide repeat unit is

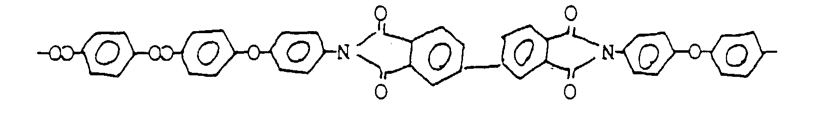

20. A copolymer according to claim 1, 2 or 3, wherein the said imide repeat unit is

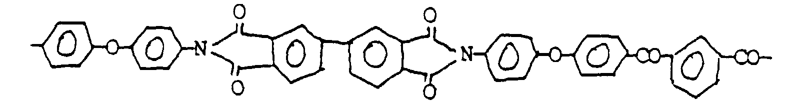

21. A copolymer according to claim 18, 19, or 20, having a further repeat unit of an isomeric form or formula VII corresponding to the form of the imide unit.

22. A copolymer according to claim 1, 2 or 3 wherein the said imide repeat unit is the m-, -and/or p-isomer of

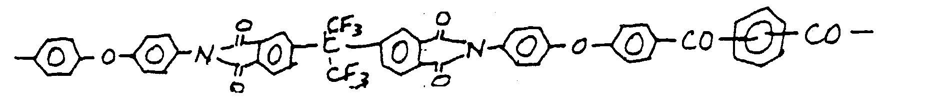

23. A copolymer according to claim 22, having a repeat unit of an isomeric form of formula VII corresponding to the form of the imide unit.

24. A copolymer according to claim 1 or 2, wherein the said imide unit is

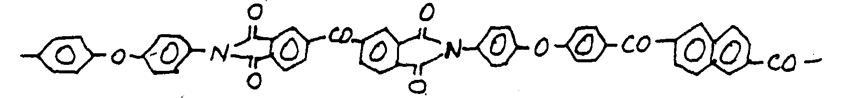

25. A copolymer according to claim 24, having a repeat unit of formula

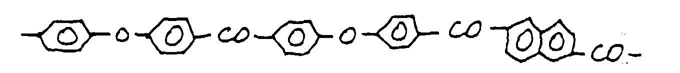

26. A copolymer according to claim 1, 2 or 3, wherein the said imide repeat unit is

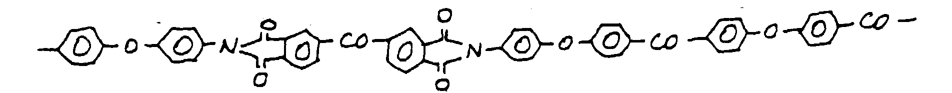

27. A copolymer according to claim 26, having an repeat unit of formula

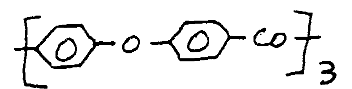

28. A copolymer according to claim 1, 2 or 3, wherein the said imide repeat unit is

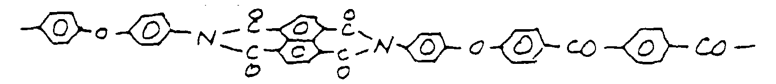

29. A copolymer according to claim 28, having a repeat unit of the p-form of formula VII.

30. A copolymer according to claim 1, 2 or 3 wherein the said imide repeat unit is

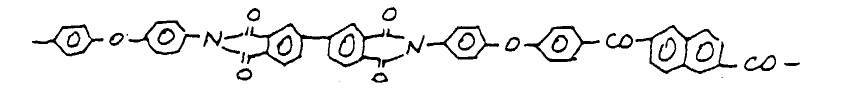

31. A copolymer according to claim 30, having a further repeat unit of formula

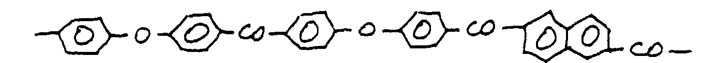

32. A copolymer according to claim 1, 2 or 3, wherein the said imide repeat unit is

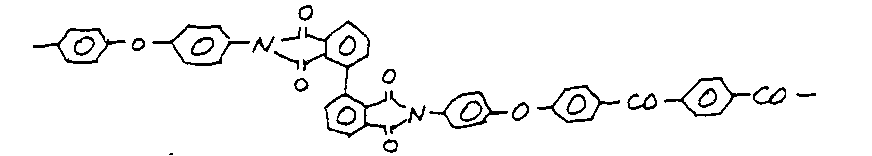

33. A copolymer according to claim 32, having a further repeat unit of the p-form of formula VII.

34. A copolymer according to claim 1, 2 or 3, wherein the said imide repeat unit is

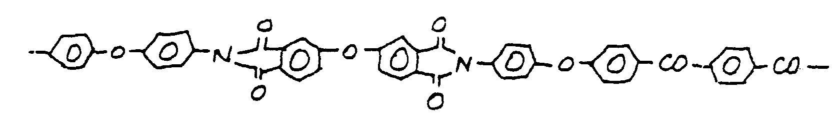

35. A copolymer according to claim 34, having a further repeat unit of the p-form of formula VIII,

36. A copolymer according to any preceding claim which is partially crystalline.

37. A copolymer according to claim 36 which has a least 20 percent crystallinity as measured by X-ray diffraction.

38. A copolymer according to any preceding claim comprising less than 50 mol percent of the imide repeat unit.

39. A copolymer according to claim 1 or 3 or any claim when dependent thereon, wherein the imide repeat units are derived from a pre-existing imide monomer.

40. A copolymer according to any preceding claim which is substantially free of un-imidised amic acid moieties.

41. A copolymer according to claim 1, or any claim when dependent thereon, wherein substantially all of the said imide units incorporate the unchanged cyclic imide form or the imide monomer.

42. A method of manufacturing a polymer according to any preceding claim, comprising polymerising (a) an imide monomer corresponding to the part of the said imide repeat unit containing Rᵢ and having terminal Ar moieties, which terminal Ar moieties have either (Case 1) at least one reactive hydrogen and no acyl groups on each terminal Ar or (case 2) at least one reactive hydrogen on one terminal Ar and an acyl halide group on the other terminal Ar with (b) an aromatic diacyl halide in Case 1 or with itself in Case 2, in the presence of a Lewis acid catalyst.

43. A method according to claim 41, wherein a Lewis base controlling agent for the Lewis acid catalyst is included in the polymerisation reaction mixture.

## Patentansprüche

1. Ether-Keton-Imid Copolymer, das zwei Grundeinheiten aufweist, von denen eine eine Imid-Grundeinheit ist, wobei diese Imid-Grundeinheit die Formel hat 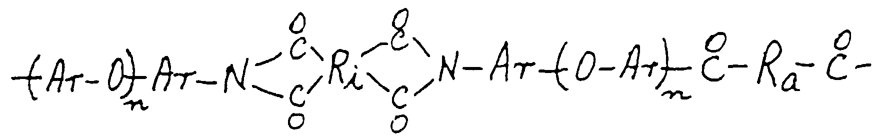 die die Bedingungen A und B erfüllt,
wobei
Bedingung A
lautet, daß wenigstens eine der Bedingungen (i) und (ii) richtig sind, nämlich daß
(i) Ri 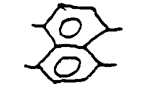 ist oder 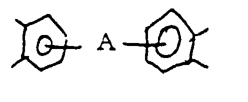 ist,
in denen A eine Direktbindung oder -O- oder ein anderer im wesentlichen nicht-elektronenziehender Rest ist,
(ii) Ra wenigstens teilweise eine Arylen-Einheit ist, die keine m- oder p-Phenylengruppe ist;
Bedingung B
lautet, daß
Ri ausgewählt ist aus substituierten oder unsubstituierten 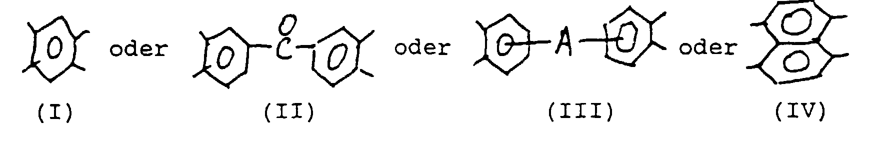 wobei A eine Direktbindung, O, S, SO₂, CH₂, C(CH₃)₂, C(CF₃)₂, Si(CH₃)₂, -O-Ar-O- ist oder A gleich CO in Strukturen ist, die anders als II sind;
Ra ausgewählt ist aus substituierten oder unsubstituierten wenigstens teilweise Arylen-Einheiten, die über ihre Arylenring-Kohlenstoffatome mit den benachbarten -CO- Gruppen der Imid-Grundeinheit verbunden sind;
jedes Ar unabhängig eine substituierte oder unsubstituierte Arylen-Einheit ist; und
jedes n unabhängig 1 oder 2 ist, vorzugsweise 1.

2. Copolymer nach Anspruch 1, bei dem die andere Grundeinheit eine Aryletherketon-Grundeinheit ist.

3. Copolymer nach Anspruch 2, bei dem die Aryletherketon-Grundeinheit ausgewählt ist aus

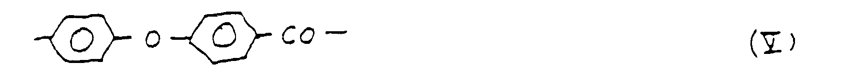

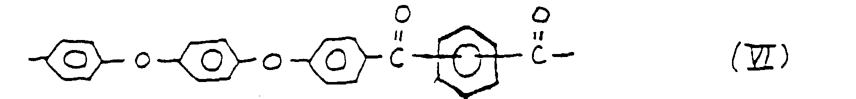

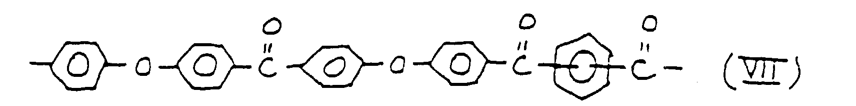

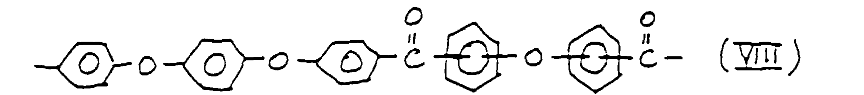

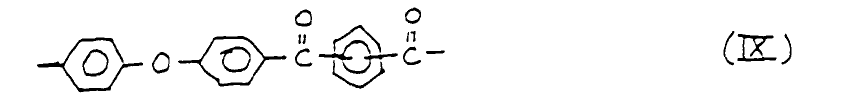

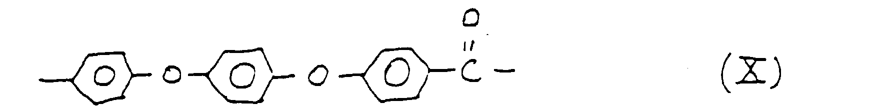

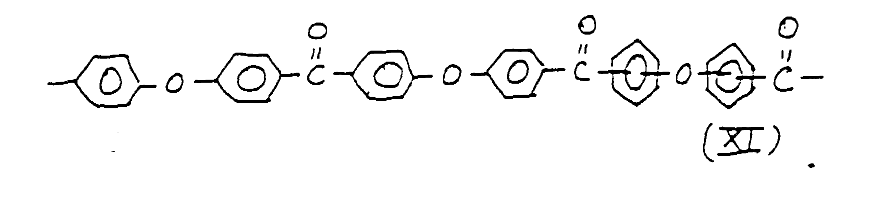

4. Ether-Keton-Imid Copolymer, das eine Imid-Grundeinheit der Formel 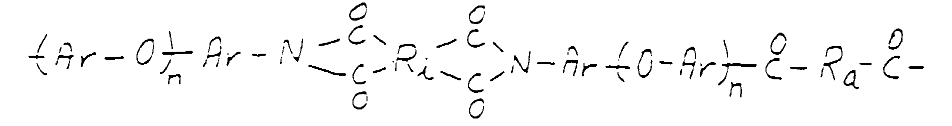 aufweist, die die Bedingungen A und B erfüllt,
von denen Bedingung A darin besteht, daß wenigstens eine der Bedingungen (i) und (ii) richtig ist,
nämlich daß
(i) Ri 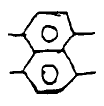 ist oder daß
(ii) Ri 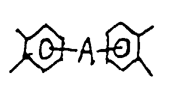 ist, wobei
A eine Direktbindung, O, S, SO₂, CH₂, C(CH₃)₂, C(CF₃)₂, Si(CH₃)₂ oder -O-Ar-O- ist,
und (wenn die Bedingung (ii) erfüllt ist)
Ra wenigstens teilweise eine Arylen-Einheit ist, die kein m-Phenylen ist,
und bei der die Bedingung B darin besteht, daß
Ra ausgewählt ist aus substituierten oder unsubstituierten wenigstens teilweise Arylen-Einheiten, die über ihre Arylenring-Kohlenstoffatome mit den benachbarten -CO- Gruppen der Imid-Grundeinheit verbunden sind;
jedes Ar unabhängig eine substituierte oder unsubstituierte Arylen-Einheit ist; und
jedes n unabhängig 1 oder 2 ist, vorzugsweise 1.

5. Copolymer nach einem der vorhergehenden Ansprüche, wobei Rₐ ausgewählt ist aus substituierten oder unsubstituierten p-Phenylen-, m-Phenylen-, 1,4-Naphthylen-, 2,6-Naphthylen-Gruppen, 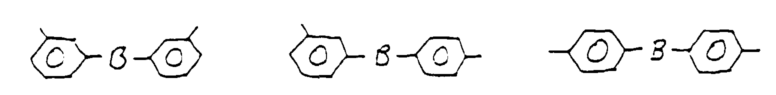 in denen B ein Ether-Sauerstoffatom, eine Keton-, Thioether-, Sulfon-, Hexafluorisopropyliden-, Isopropylidengruppe oder eine Direktbindung ist.

6. Copolymer nach einem der vorhergehenden Ansprüche,
wobei jedes Ar unabhängig eine substituierte oder unsubstituierte p-Phenylen- oder m-Phenylen- oder 3,3'-, 3,4'-oder 4,4'-Biphenylen- oder 2,6-Naphthylengruppe ist, vorzugsweise eine andere Gruppe als eine Naphthylengruppe.

7. Copolymer nach Anspruch 1, 2 oder 3, oder einem anderen davon abhängigen Anspruch,
wobei A ein Ether-Sauerstoffatom, eine Sulfon-, Hexafluorisopropyliden-, Isopropylidengruppe oder eine Direktbindung ist, oder wobei A eine Ketongruppe in Strukturen ist, die anders als II sind.

8. Copolymer nach Anspruch 4, oder Anspruch 5 oder 6, wenn sie von Anspruch 4 abhängig sind,
wobei A ein Ether-Sauerstoffatom, eine Sulfon-, Hexafluorisopropyliden-, Isopropylidengruppe oder eine Direktbindung ist.

9. Copolymer nach einem der vorhergehenden Ansprüche, wobei Rᵢ 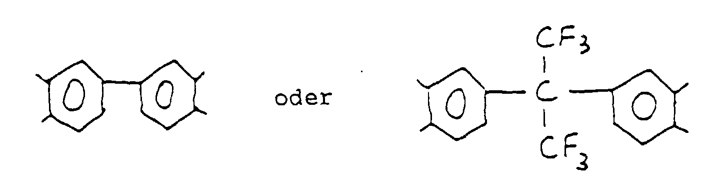 oder 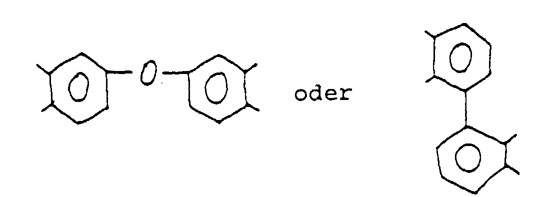 ist.

10. Copolymer nach einem der vorhergehenden Ansprüche, wobei Rₐ 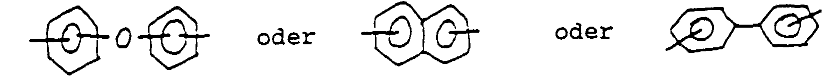 ist.

11. Copolymer nach den Ansprüchen 1, 2, 3 oder einem der davon abhängenden Ansprüche,
wobei Teil (i) von Bedingung A gilt und Rₐ eine m- oder p-Phenylengruppe ist.

12. Copolymer nach Anspruch 3, oder einem der Ansprüche 4 bis 8, wenn sie von diesem abhängig sind,
wobei Rₐ eine p-Phenylengruppe ist.

13. Copolymer nach einem der vorhergehenden Ansprüche,
wobei die Ar-Einheiten, die jeweils an die zwei Imid-Stickstoffatome gebunden sind, untereinander gleich sind, und die anderen Ar-Einheiten untereinander gleich sind, wobei alle Ar-Einheiten vorzugsweise einander gleich sind.

14. Copolymer nach Anspruch 13,
bei dem alle Ar-Einheiten Phenylengruppen sind, vorzugsweise p-Phenylengruppen.

15. Copolymer nach Anspruch 1, 2 oder 3,
bei dem die Grundeinheit 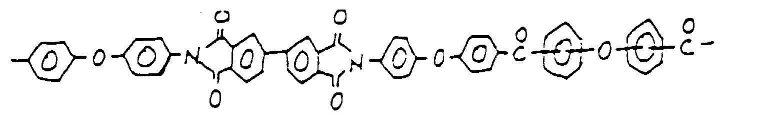 ist.

16. Copolymer nach Anspruch 1, 2 oder 3,
bei dem die Imid-Grundeinheit 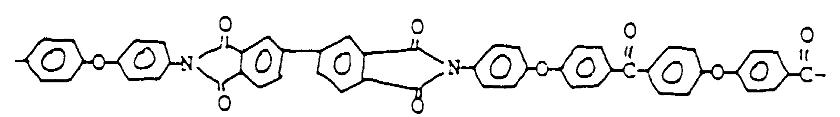 ist.

17. Copolymer nach Anspruch 15 oder 16 mit einer Grundeinheit der Formel V oder einer isomeren Form von Formel XI, die der Form der Imid-Einheit entspricht.

18. Copolymer nach Anspruch 1, 2 oder 3, bei dem die Imid Grundeinheit 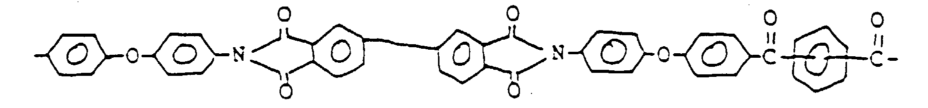 ist.

19. Copolymer nach Anspruch 1, 2 oder 3,
bei dem die Grundeinheit 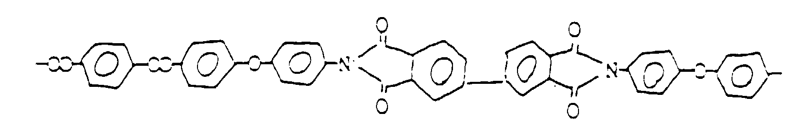 ist.

20. Copolymer nach Anspruch 1, 2 oder 3,
bei dem die Imid-Grundeinheit 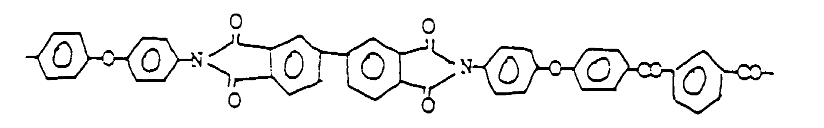 ist.

21. Copolymer nach Anspruch 18, 19 oder 20 mit einer weiteren Grundeinheit einer isomeren Form von Formel VII, die der Form der Imid-Grundeinheit entspricht.

22. Copolymer nach Anspruch 1, 2 oder 3,
bei dem die Imid-Grundeinheit das m- und/oder p-Isomer von 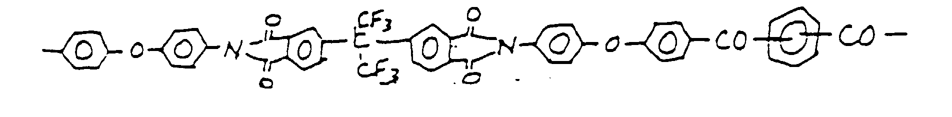 ist.

23. Copolymer nach Anspruch 22 mit einer Grundeinheit einer isomeren Form von Formel VII, die der Form der Imid-Grundeinheit entspricht.

24. Copolymer nach Anspruch 1 oder 2,
bei dem die Imid-Grundeinheit 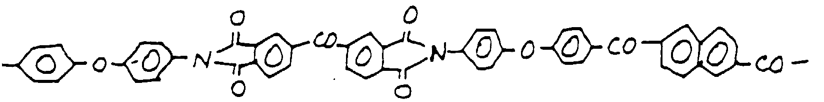 ist.

25. Copolymer nach Anspruch 24 mit einer Grundeinheit der Formel

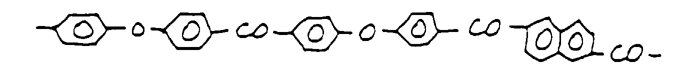

26. Copolymer nach Anspruch 1, 2 oder 3,
bei dem die Imid-Grundeinheit 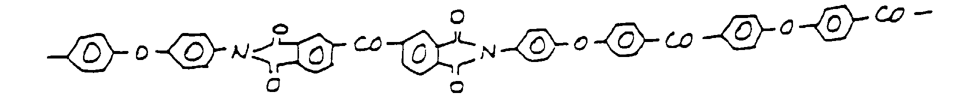 ist.

27. Copolymer nach Anspruch 26 mit einer Grundeinheit der Formel

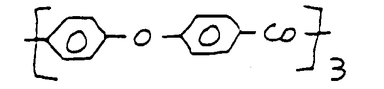

28. Copolymer nach Anspruch 1, 2 oder 3,
bei dem die Imid-Grundeinheit 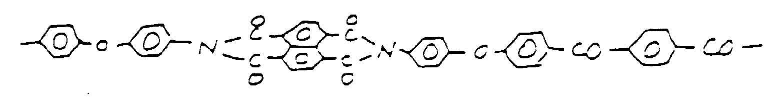 ist.

29. Copolymer nach Anspruch 28 mit einer Grundeinheit in der p-Form von Formel VII.

30. Copolymer nach Anspruch 1, 2 oder 3,
bei dem die Imid-Grundeinheit 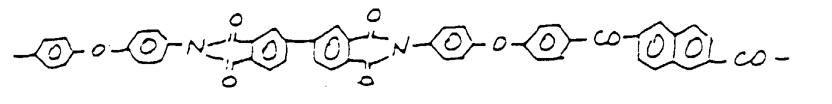 ist.

31. Copolymer nach Anspruch 30 mit einer weiteren Grundeinheit der Formel

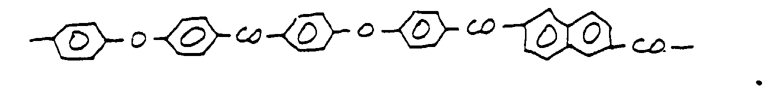

32. Copolymer nach Anspruch 1, 2 oder 3,
bei dem die Imid-Grundeinheit 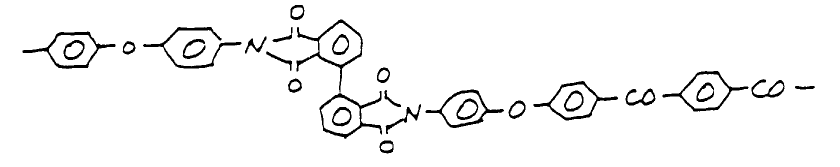 ist.

33. Copolymer nach Anspruch 32 mit einer weiteren Grundein heit der p-Form von Formel VII.

34. Copolymer nach Anspruch 1, 2 oder 3,
bei dem die Imid-Grundeinheit 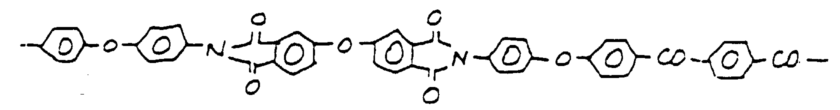 ist.

35. Copolymer nach Anspruch 34 mit einer weiteren Grundeinheit der p-Form von Formel VIII.

36. Copolymer nach einem der vorhergehenden Ansprüche,
das teilweise kristallin ist.

37. Copolymer nach Anspruch 36,
das eine Kristallinität von wenigstens 20 Prozent, gemessen mit Röntgenstrahlbeugung, hat.

38. Copolymer nach einem der vorhergehenden Ansprüche,
das weniger als 50 Molprozent der Imid-Grundeinheit aufweist.

39. Copolymer nach Anspruch 1 oder 3, oder einem anderen davon abhängenden Anspruch,
bei dem die Imid-Grundeinheiten von einem bereits bestehenden Imid-Monomer abgeleitet sind.

40. Copolymer nach einem der vorhergehenden Ansprüche,
das im wesentlichen frei von nicht-imidisierten Amic-Säureeinheiten ist.

41. Copolymer nach Anspruch 1, oder einem anderen davon abhängenden Anspruch,
bei dem im wesentlichen alle Imid-Einheiten die unveränderte Imid-Ringstruktur oder das Imid-Monomer enthalten.

42. Verfahren zur Herstellung eines Polymers nach einem der vorhergehenden Ansprüche, das die Polymerisierung (a) eines Imid-Monomers, das dem Teil der Imid-Grundeinheit entspricht, die Rᵢ enthält und die terminale Ar-Einheiten hat, wobei die Ar-Einheiten entweder (Fall 1) wenigstens ein reaktives Wasserstoffatom und keine Acylreste an jedem terminalen Ar habe, oder (Fall 2) wenigstens ein reaktives Wasserstoffatom an dem einen terminalen Ar und einen Acylhalogenrest an dem anderen terminalen Ar haben, mit (b) einem aromatischen Diacylhalogenid in Fall 1, oder mit sich selbst in Fall 2, in Gegenwart eine Lewis-Säure-Katalysators aufweist.

43. Verfahren nach Anspruch 41,
bei dem das Polymerisations-Reaktionsgemisch eine Lewis-Base als Steuermittel für den Lewis-Säure-Katalysator enthält.

## Revendications

1. Copolymère éther-cétone-imide comprenant deux motifs répétés, dont l'un est un motif répété imide, motif répété imide qui répond à la formule 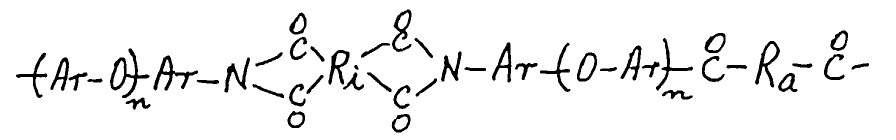 qui satisfait aux conditions A et B,
dans lequel
la condition A
consiste à satisfaire au moins une des conditions (i) et (ii), à savoir
(i) Ri représente un groupe 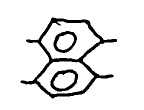 ou représente un groupe 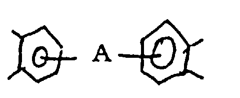 dans lequel A représente une liaison directe ou -O-, ou un autre groupe pratiquement non électrophile,
(ii) Ra représente un groupement arylène au moins partiel autre qu'un groupement m- ou p-phénylène ;
la condition B
consiste à choisir Ri entre des groupements, substitués ou non substitués, de formule 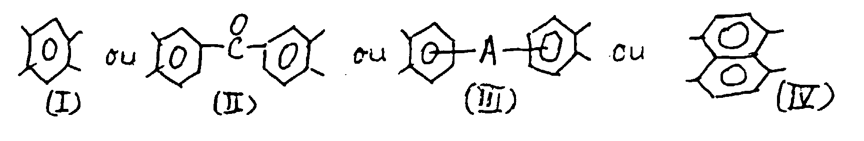 dans laquelle A représente une liaison directe, O, S, un groupe SO₂, CH₂, C(CH₃)₂, C(CF₃)₂, Si(CH₃)₂, -O-Ar-O-, ou A représente un groupe CO dans des structures autres que II ;
Ra est choisi entre des groupements arylène au moins partiels, substitués ou non substitués, fixés par leurs atomes de carbone du noyau arylène aux groupes -CO- adjacents du motif répété imide ;
chaque groupement Ar représentant indépendamment un groupement arylène substitué ou non substitué ; et
chaque indice n étant indépendamment égal à 1 ou 2, de préférence 1.

2. Copolymère suivant la revendication 1, dans lequel l'autre motif répété est un motif répété aryléthercétone.

3. Copolymère suivant la revendication 2, dans lequel le motif répété aryléthercétone est choisi entre

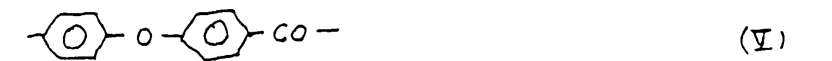

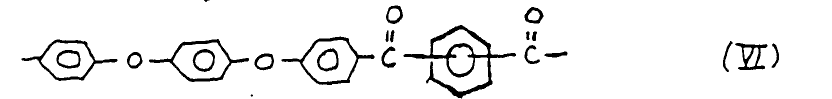

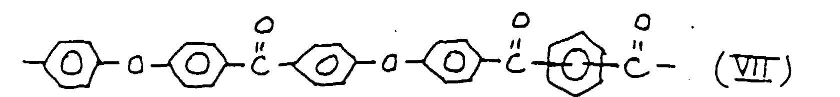

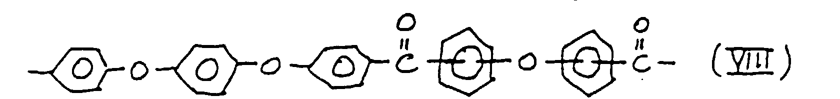

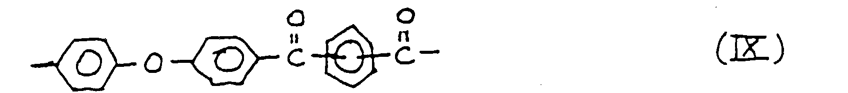

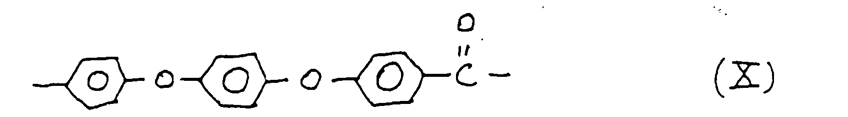

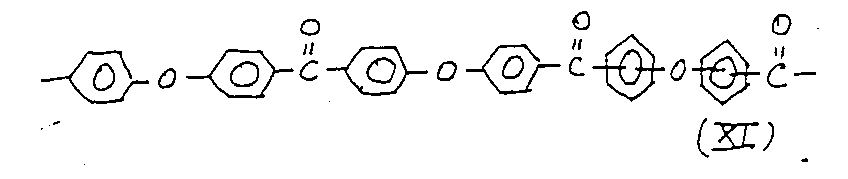

4. Copolymère éther-cétone-imide comprenant un motif répété imide de formule 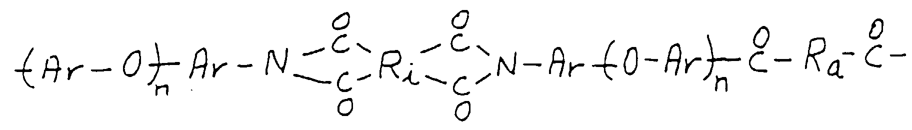 qui satisfait aux conditions A et B,
dans lequel la condition A consiste à satisfaire au moins une des conditions (i) et (ii), à savoir
(i) Ri représente un groupe 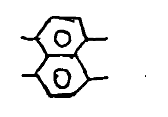 ou
(ii) Ri représente un groupe 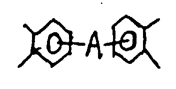 dans lequel
A représente une liaison directe, O, S, un groupe SO₂, CH₂, C(CH₃)₂, C(CF₃)₂, Si(CH₃)₂ ou -O-Ar-O-,
et (lorsque la condition (ii) est satisfaite)
Ra représente un groupement arylène au moins partiel autre qu'un groupement m-phénylène ;
et dans lequel la condition B consiste à choisir
Ra entre des groupements arylène au moins partiels, substitués ou non substitués, fixés par leurs atomes de carbone du noyau arylène aux groupes -CO- adjacents du motif répété imide ;
chaque groupement Ar représentant indépendamment un groupement arylène substitué ou non substitué ; et
chaque indice n étant indépendamment égal à 1 ou 2, de préférence 1.

5. Copolymère suivant l'une quelconque des revendications précédentes, dans lequel Ra est choisi entre des groupes, substitués ou non substitués, p-phénylène, m-phénylène, 1,4-naphtylène, 2,6-naphtylène, 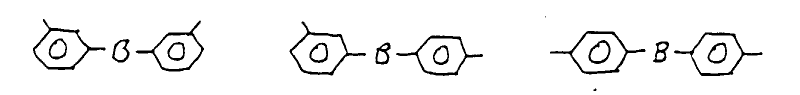 dans lesquels B représente un atome d'oxygène d'éther, un groupe cétone, un groupe thioéther, un groupe sulfone, un groupe hexafluoro-isopropylidène, un groupe isopropylidène, ou une liaison directe.

6. Copolymère suivant l'une quelconque des revendications précédentes, dans lequel chaque groupe Ar représente indépendamment un groupe, substitué ou non substitué, p-phénylène ou m-phénylène ou 3,3'-, 3,4'- ou 4,4'-biphénylylène ou 2,6-naphtylène, de préférence un groupe autre qu'un groupe naphtylène.

7. Copolymère suivant la revendication 1, 2 ou 3, ou suivant l'une quelconque des revendications qui en dépendent, dans lequel A représente un atome d'oxygène d'éther, un groupe sulfone, un groupe hexafluoro-isopropylidène, un groupe isopropylidène ou une liaison directe, ou bien A représente une cétone dans des structures autres que II.

8. Copolymère suivant la revendication 4 ou la revendication 5 ou 6 lorsqu'elle dépend de la revendication 4, dans lequel A représente un atome d'oxygène d'éther, un groupe sulfone, un groupe hexafluoro-isopropylidène, un groupe isopropylidène ou une liaison directe.

9. Copolymère suivant l'une quelconque des revendications précédentes, dans lequel R₁ représente un groupe 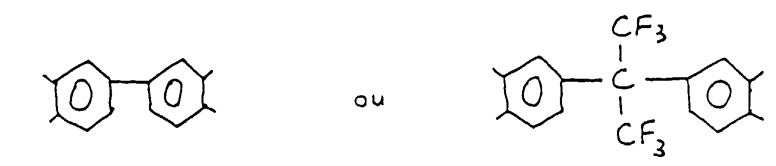 ou

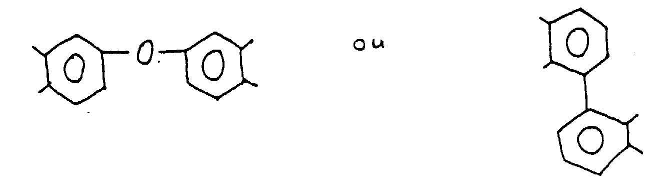

10. Copolymère suivant l'une quelconque des revendications précédentes, dans lequel R₁ représente un groupe

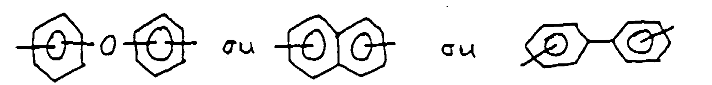

11. Copolymère suivant la revendication 1, 2 ou 3, ou suivant l'une quelconque des revendications qui en dépendent, dans lequel la partie (i) de la condition A s'applique et Rₐ représente un groupe m- ou p-phénylène.

12. Copolymère suivant la revendication 3 ou suivant l'une quelconque des revendications 4 à 8, lorsqu'elles dépendent de cette revendication, dans lequel Rₐ représente un groupe p-phénylène.

13. Copolymère suivant l'une quelconque des revendications précédentes, dans lequel les groupements Ar fixés respectivement aux deux atomes d'azote d'imide sont identiques, et les autres groupements Ar sont identiques, tous les groupements Ar étant de préférence identiques.

14. Copolymère suivant la revendication 13, dans lequel tous les groupements Ar sont des groupements phénylène, de préférence p-phénylène.

15. Copolymère suivant la revendication 1, 2 ou 3, dans lequel le motif répété répond à la formule

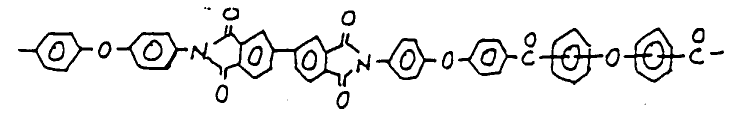

16. Copolymère suivant la revendication 1, 2 ou 3, dans lequel le motif répété imide répond à la formule :

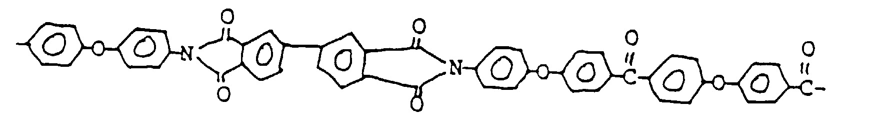

17. Copolymère suivant la revendication 15 ou 16, comprenant un motif répété de formule V ou d'une forme isomère de la formule XI correspondant à la forme du motif imide.

18. Copolymère suivant la revendication 1, 2 ou 3, dans lequel le motif répété imide répond à la formule

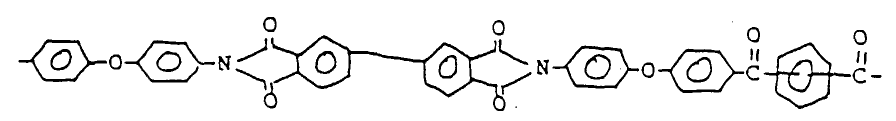

19. Copolymère suivant la revendication 1, 2 ou 3, dans lequel le motif répété imide répond à la formule

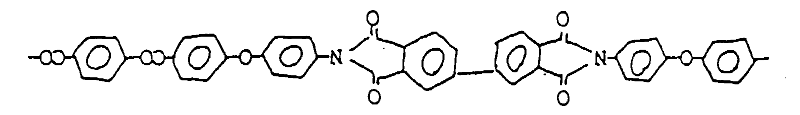

20. Copolymère suivant la revendication 1, 2 ou 3, dans lequel le motif répété imide répond à la formule

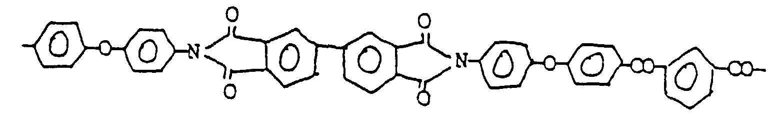

21. Copolymère suivant la revendication 18, 19 ou 20, comprenant un motif répété supplémentaire constitué d'une forme isomère de la formule VII correspondant à la forme du motif imide.

22. Copolymère suivant la revendication 1, 2 ou 3, dans lequel le motif répété imide est l'isomère m et/ou p du motif

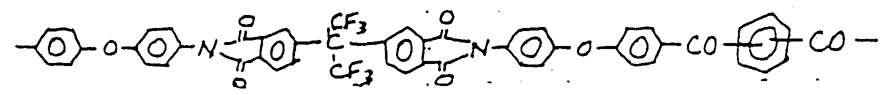

23. Copolymère suivant la revendication 22, comprenant un motif répété constitué d'une forme isomère de la formule VII correspondant à la forme du motif imide.

24. Copolymère suivant la revendication 1 ou 2, dans lequel le motif imide répond à la formule

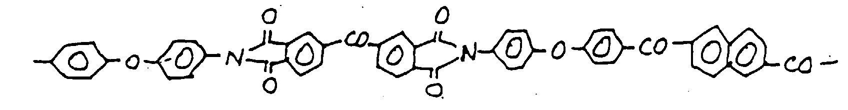

25. Copolymère suivant la revendication 24, comprenant un motif répété de formule

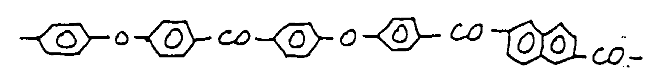

26. Copolymère suivant la revendication 1, 2 ou 3, dans lequel le motif répété imide répond à la formule

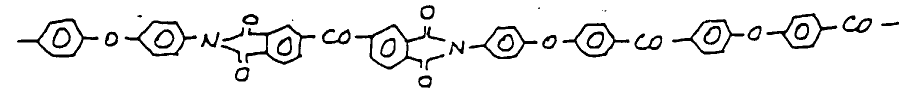

27. Copolymère suivant la revendication 26, comprenant un motif répété de formule

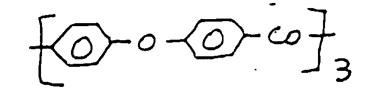

28. Copolymère suivant la revendication 1, 2 ou 3, dans lequel le motif répété imide répond à la formule

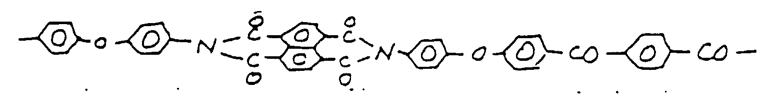

29. Copolymère suivant la revendication 28, comprenant un motif répété constitué de la forme p de formule VII.

30. Copolymère suivant la revendication 1, 2 ou 3, dans lequel le motif répété imide répond à la formule

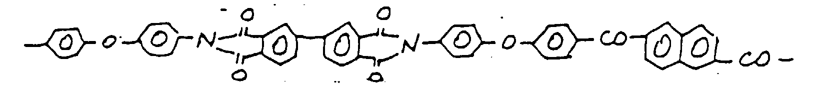

31. Copolymère suivant la revendication 30, comprenant un motif répété supplémentaire de formule

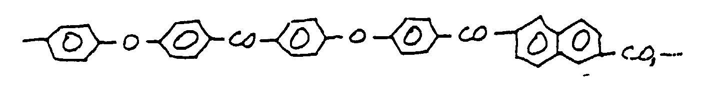

32. Copolymère suivant la revendication 1, 2 ou 3, dans lequel le motif répété imide répond à la formule

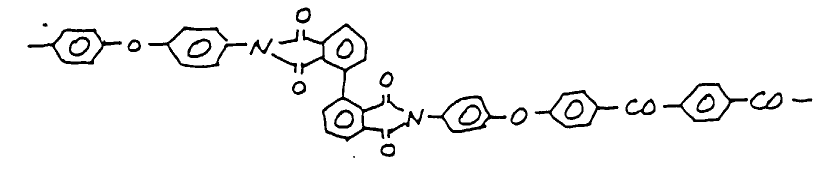

33. Copolymère suivant la revendication 32, comprenant un motif répété supplémentaire constitué de la forme p de formule VII.

34. Copolymère suivant la revendication 1, 2 ou 3, dans lequel le motif répété imide répond à la formule

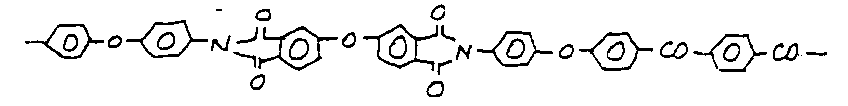

35. Copolymère suivant la revendication 34, comprenant un motif répété supplémentaire constitué de la forme p de formule VIII.

36. Copolymère suivant l'une quelconque des revendications précédentes, qui est partiellement cristallin.

37. Copolymère suivant la revendication 36, qui a une cristallinité d'au moins 20 % mesurée par diffraction des rayons X.

38. Copolymère suivant l'une quelconque des revendications précédentes, comprenant moins de 50 moles % du motif répété imide.

39. Copolymère suivant la revendication 1 ou 3 ou l'une quelconque des revendications qui en dépendent, dans lequel le motif répété imide est dérivé d'un monomère imide préexistant.

40. Copolymère suivant l'une quelconque des revendications précédentes, qui est pratiquement dépourvu de groupements acide amique non imidés.

41. Copolymère suivant la revendication 1, ou suivant l'une quelconque des revendications qui en dépendent, dans lequel pratiquement la totalité des motifs imide renferme la forme imide cyclique inchangée du monomère imide.

42. Procédé de production d'un polymère suivant l'une quelconque des revendications précédentes, comprenant la polymérisation (a) d'un monomère imide correspondant à la partie du motif répété imide contenant Rᵢ et ayant des groupements Ar terminaux, groupements Ar terminaux qui possèdent soit (cas 1) au moins un atome d'hydrogène réactif et aucun groupe acyle sur chaque groupement Ar terminal, soit (cas 2) au moins un atome d'hydrogène réactif sur un groupement Ar terminal et un groupe halogénure d'acyle sur l'autre groupement Ar terminal, avec (b) un halogénure de diacyle aromatique dans le cas 1 ou avec lui-même dans le cas 2, en présence d'un catalyseur du type acide de Lewis.

43. Procédé suivant la revendication 41, dans lequel un agent du type base de Lewis pour la régulation du catalyseur du type acide de Lewis est incorporé au mélange réactionnel de polymérisation.
